# EUROPÄISCHE PATENTANMELDUNG

(11) **EP 3 632 873 A1**
(43) Veröffentlichungstag der Anmeldung: **08.04.2020**
(21) Anmeldenummer: 18198634.0
(22) Anmeldetag: 04.10.2018
(51) Int. Cl.: C04B 28/02, C04B 28/04, C04B 40/00

(54) **ZUBEREITUNG UMFASSEND EINEN CELLULOSEETHER UND/ODER EIN POLYSACCHARID UND EINEN FETTALKOHOL**

(71) Anmelder: SE Tylose GmbH & Co.KG, 65203 Wiesbaden (DE)
(72) Erfinder: HAVENITH, Vanessa, 65203 Wiesbaden (DE); HÄCKER, Claus-Jochen, 65203 Wiesbaden (DE); NEBEL, Heiko, 65203 Wiesbaden (DE)
(74) Vertreter: Weickmann & Weickmann PartmbB

(57) **Zusammenfassung**

Die Erfindung betrifft eine Zubereitung umfassend mindestens einen Celluloseether und/oder mindestens ein Polysaccharid und mindestens einen Fettalkohol, deren Herstellung und Verwendung, insbesondere in Baustoffen.

## Beschreibung

Die Erfindung betrifft eine Zubereitung umfassend mindestens einen Celluloseether und/oder mindestens ein Polysaccharid und mindestens einen Fettalkohol, deren Herstellung und Verwendung, insbesondere in Baustoffen.

In der Bauindustrie werden zum Verbinden oder Beschichten von Bauteilen u.a. zementäre Kleber, Putze, Spachtelmassen sowie spezielle Klebe- und Armierungsspachtel für Wärmedämmverbundsysteme eingesetzt. Dabei handelt es sich um Mischungen aus einem oder mehreren Bindemitteln (z.B. Zement, Kalkhydrat), Füllstoffen (z.B. Sande mit verschiedenen Korngrößen) und anderen Additiven, wie Celluloseether, Dispersionspulver, Stärke, Stärkederivate wie Stärkeether und Luftporenbildner. Diese Baustoffe werden Werktrockenmörtel genannt, da sie werkseitig produziert und zum Verarbeiten nur noch mit Wasser angemischt werden müssen.

Fliesenkleber auf Zementbasis werden üblicherweise im Dünnbettverfahren appliziert, wozu ein ebener Untergrund benötigt wird, auf dem der Kleber mit einer Zahnkelle in gleichmäßiger Schichtdicke aufgetragen wird. In den so applizierten Klebemörtel werden Fliesen ganzflächig eingelegt und ausgerichtet. Ziel der Verarbeiter ist eine effektive und effiziente Arbeitsweise, die großflächiges Applizieren des Klebers beinhaltet, um anschließend die Fliesen einlegen zu können. Dazu muss der Kleber eine möglichst lange Flieseneinlegezeit oder offene Zeit bzw. Benetzungszeit aufweisen, um eine flächige Benetzung der Fliesenrückseite zu gewährleisten. Zu den Hauptbestandteilen von Dünnbettklebern zählen Zement, Sand und Gesteinsmehl sowie Celluloseether. Zur Optimierung der Verarbeitungs- und Festmörteleigenschaften können weitere Additive wie Dispersionspulver, Stärkederivate, Zement-Beschleuniger, anorganische Verdicker und Fasern enthalten sein.

Die Bestimmung der offenen Zeit von Fliesenklebern erfolgt nach ISO 13007 bzw. EN 1346. Auf einer genormten Betonplatte wird der Fliesenkleber appliziert. Saugfähige Fliesen werden nach einer definierten Zeit in den Kleber eingelegt, bei definierten Bedingungen mehrere Wochen gelagert und anschließend durch ein Haftzugprüfgerät abgerissen. Die daraus resultierenden Haftzugwerte definieren die Art des Fliesenklebers, wobei hochwertige Kleber (C1 und C2) Haftzugwerte von ≥ 0,5 N/mm² nach einer Einlegezeit von 30 min erreichen sollen. Parallel zu diesem Test können sogenannte Benetzungsversuche, in Anlehnung an DIN EN 1347, durchgeführt werden. Hierzu können selbige saugfähige Fliesen verwendet werden, die auch für die Bestimmung der offenen Zeit zum Einsatz kommen. Diese Fliesen werden ebenfalls nach definierten Zeiten in das Mörtelbett eingelegt, mit 2kg-Gewichten für 30 sec beschwert und anschließend abgenommen, wobei der verbleibende Mörtelrest auf der Fliesenrückseite prozentual bestimmt wird. Qualitativ hochwertige Fliesenkleber sollten auf der Fliesenrückseite eine mit Mörtel benetzte Oberfläche von > 50% nach 30 Minuten aufweisen.

Ein generelles Problem bei den Fliesenklebern ist eine frühzeitige Filmbildung bzw. Karbonatisierung an der Oberfläche des aufgekämmten Mörtels, der die Benetzungszeit verkürzt und somit zu einer schlechteren Haftung der Fliesen und einer kürzeren offenen Zeit beiträgt. Analoges gilt für Putze, Klebe- und Armierungsspachtel für Wärmedämmverbundsysteme und sonstige Zement-basierte Trockenmörtel, bei denen eine frühzeitige Austrocknung die weiteren Arbeitsschritte behindert bzw. die Materialeigenschaften verschlechtert. Folgende Patente beschreiben den Einsatz von Fettalkoholen in diversen Anwendungen, um teils den Problemen des frühzeitigen Austrocknens entgegen zu wirken:
US 3 486 916 beschreibt die Verwendung einer Emulsion von Fettalkoholen (C₁₄₋₂₀), die durch einen inhibitierenden Film auf der Oberfläche gegossener Gegenstände aus hydraulischen Zementmischungen die Wasserverdunstung verzögert.

Gegenstand der EP 0 977 716 B1 ist die Verwendung von Fettalkoholen mit 8 bis 72 C-Atomen als Additiv für Putze und Mörtel. Die Fettalkohole, gesättigt oder ungesättigt, geradkettig oder verzweigt, liegen als wässrige Alkoholdispersion vor und werden hier auf eine feste (silikatische) Trägersubstanz aufgebracht, wobei das hergestellte Additiv in Pulverform vorliegt und zu günstigen Eigenschaften im Putz bzw. Mörtel führt, wie eine verlängerte Verarbeitungszeit als auch eine verlängerte offene Zeit.

Andere Patente wie WO 2002/031069 A1 bzw. EP 1322716 B1 erwähnen die Verwendung von Wachsen bzw. Fettalkoholen als Additiv zur Verlängerung der offenen Zeit bzw. der Verarbeitungszeit in Ausgleichs- und Dämmmassen auf Epoxidharz-Basis. Die Darreichungsform ist entweder pulverförmig, wobei die Fettalkohole (C₁₆₋₇₂) auf einen Träger aufgebracht werden oder flüssig in Form einer wässrigen Emulsion. Die Einsatzmenge beträgt 0,1 - 2,0 Gew.-% auf die Gesamtformulierung.

WO 1995/004008A1 behandelt den Einsatz von C₁₄₋₂₂-Fettalkoholen in einer Einsatzmenge von 0,05 bis 3 Gew.-% bezogen auf den Zementgehalt, die in einer hydraulischen Zementmischung Kalk-Ausblühungen verhindern.

US 2003/0209170 A1 widmet sich der Minimierung von Staub an der Oberfläche von Zement und Betonkonstruktionen durch den Einsatz von C₁₂₋₂₂-Fettalkoholen in Kombination mit einem Schwind-reduzierenden Additiv.

US 5 807 502 beschreibt den Einsatz von C₁₀₋₂₀-Fettalkoholen als Entschäumer in der Bauindustrie.

US 9,005,752 B2 beschreibt ebenfalls den Einsatz von C₁₆₋₁₈-Fettalkohol- Derivaten als Entschäumer, die zusammen mit einem Silikonöl auf eine silikatische Trägersubstanz aufgebracht werden. Der Entschäumungseffekt soll eine Verbesserung der Biegezug- und Druckfestigkeiten sowie der Haftzugwerte bei Frost-Tau-Lagerung in Trockenmörteln erwirken.

Der Einsatz von Fettalkoholen, gehandelt als Loxanol OT-Reihe der BASF Ludwigshafen, als offene Zeit-Verlängerer in Farben, dispersionsgebundenen Baustoffen, Putzen und Mörteln ist ebenfalls bekannt. Hier sind flüssige Dispersionen und Fettalkohole auf silikatischen Trägermaterialien im Handel erhältlich.

Der Stand der Technik beschreibt den Einsatz von Fettalkoholen bzw. Fettalkoholen in flüssiger Form, da diese in Pulverform bzw. im festen Zustand nur im geringen Maße wasserlöslich sind. Die Verwendung von flüssigen Fettalkoholen, bspw. in Form von Emulsionen oder Dispersionen, ist anwenderunfreundlich, wenn man diese in Trockenmörtelsystemen wie Fliesenklebern oder Klebe- und Armierungsspachtel für Wärmedämmverbundsysteme einsetzen möchte. Hier müsste ein Zwei-Komponenten-System angeboten werden: Eine Komponente stellt die wässrige Fettalkohol-Phase dar, die gleichzeitig als Anmachwasser dient. Die zweite Phase besteht aus der Trockenmörtelmischung. Anwenderfehler bzw. Dosierfehler können hier nicht ausgeschlossen werden. Hinzu kommt die Notwendigkeit einer entsprechend größeren Lagerfläche im Handel sowie auf den Baustellen. Trockenmischungen sind daher zu bevorzugen.

Pulverförmige Fettalkohol-Additive enthalten üblicherweise eine Trägersubstanz, die nachteilige Auswirkungen auf das Baustoffsystem haben kann. Silikatische Trägersubstanzen wie sie in den herkömmlichen pulverförmigen Fettalkohol-Additiven, z.B. Loxanol OT 5900 der Firma BASF Ludwigshafen, verwendet werden sind im Gegensatz zum Celluloseether während des Trocknungsprozesses immobil und daher nicht sonderlich wirkungsvoll, Benetzungszeit bzw. offene Zeit zu verlängern.

Aufgabe der vorliegenden Erfindung ist es, ein festes Additiv für Baustoffsysteme bereitzustellen, das die Benetzungszeit und/oder die offene Zeit der Baustoffsysteme signifikant verlängert und die Haftzugwerte der Baustoffsysteme deutlich verbessert. Das Additiv soll dem trockenen Baustoffsystem beigemischt werden können. Die Aufgabe wurde gelöst durch eine Zubereitung umfassend
(i) mindestens einen Celluloseether und/oder mindestens ein Polysaccharid oder ein Derivat davon, bevorzugt mindestens einen Celluloseether,
(ii) mindestens einen Fettalkohol oder ein Dimer oder Trimer davon,
(iii) gegebenenfalls mindestens ein hydraulisches Bindemittel und
(iv) gegebenenfalls mindestens eine Gesteinskörnung.

Pulverförmige Fettalkohole sind bekanntlich nur in geringem Maße wasserlöslich, weshalb sie entweder in Form einer Emulsion bzw. Dispersion vorliegen oder auf einem Trägermaterial aufgebracht werden müssen, um ihre Wirksamkeit in Mörtelsystemen zu entfalten. Fettalkohol-Emulsionen sind wie bereits erwähnt anwenderunfreundlich und die bisherigen pulverförmigen Fettalkohole auf Trägersubstanzen in Bezug auf die offene Zeit und Benetzungszeit nicht ausreichend wirksam. Es hat sich gezeigt, dass Fettalkohole mit Celluloseether in eine pulverförmige, stabile und hochreaktive Form überführt werden können.

Die erfindungsgemäße Zubereitung enthält bevorzugt weniger als 20 Gew.-%, bevorzugt weniger als 15 Gew.-%, stärker bevorzugt 0-10 Gew.-%, noch stärker bevorzugt 0,01-8 Gew.-% Wasser bezogen auf die Gesamtmasse der Zubereitung.

In der erfindungsgemäßen Zubereitung liegen die Komponenten (i) und (ii) bevorzugt als Feststoff vor. Besonders bevorzugt bilden Komponente (i) und Komponente (ii) gemeinsam einen Partikel. Bevorzugt sind Komponente (i) und Komponente (ii) in dem Partikel homogen verteilt. So kann der Celluloseether und/oder das Polysaccharid und der Fettalkohol in der erfindungsgemäßen Zubereitung entweder miteinander verschmolzen sein oder der Fettalkohol bildet einen Film um den Celluloseether und/oder das Polysaccharid. In einer besonders bevorzugten Ausführungsform liegen die Komponente (i) und Komponente (ii) als feste Lösung vor. Bevorzugt liegt der durchschnittliche Durchmesser d₅₀ des Partikels im Bereich von 0,01-1.000 µm, bevorzugt 0,01-500 µm, stärker bevorzugt 0,01-250 µm.

Bevorzugt ist der Celluloseether ausgewählt aus Methylcellulose (MC), Methylhydroxypropylcellulose (MHPC), Methylhydroxyethylcellulose (MHEC), Hydroxyethylcellulose (HEC), Ethylhydroxyethylcellulose (EHEC), Methylethylhydroxyethylcellulose (MEHEC) Carboxymethylcelluloseether (CMC), Carboxymethylhydroxyethylcelluloseether (CMHEC), Carboxymethylhydroxypropylcelluloseether (CMHPC), Carboxymethylmethylcelluloseether (CMMC), Carboxymethylmethylhydroxyethylcelluloseether (CMMHEC), Carboxymethylmethylhydroxypropylcelluloseether (CMMHPC), Sulfoethylmethylcelluloseether (SEMC); Sulfoethylmethylhydroxyethylcelluloseether (SEMHEC) und Sulfoethylmethylhydroxypropylcelluloseether (SEMHPC) und Methylhydroxyethylhydroxypropylcelluloseether (MHEHPC), stärker bevorzugt Methylhydroxypropylcellulose und Methylhydroxyethycellulose.

Besonders bevorzugt wird Methylcellulose, die einen durchschnittlichen Substitutionsgrad DS_{Methyl} von 1,4 bis 2,2, bevorzugt 1,6 bis 2,0 aufweist; Methylhydroxypropylcellulose (MHPC), die einen durchschnittlichen Substitutionsgrad DS_{Methyl} von 1,2 bis 2,2, bevorzugt 1,3 bis 2,0 und bevorzugt einen molekularen Substitutionsgrad MS_{Hydroxypropyl} von 0,1 bis 1,0, stärker bevorzugt von 0,15 bis 0,7 aufweist;
Methylhydroxyethylcellulose (MHEC), die einen durchschnittlichen Substitutionsgrad DS_{Methyl} von 1,2 bis 2,2, bevorzugt 1,4 bis 1,9 und bevorzugt einen molekularen Substitutionsgrad MS_{Hydroxyethyl} von 0,05 bis 0,4, besonders bevorzugt 0,1 bis 0,35 aufweist;
Hydroxyethylcellulose (HEC), die einen mittleren Substitutionsgrad MS_{Hydroxyethyl} von 1,2 bis 4,0, bevorzugt 1,6 bis 3,5 aufweist;
Ethylhydroxyethylcellulose (EHEC), die einen durchschnittlichen Substitutionsgrad DS_{Ethyl} von 0,5 bis 1,5 und bevorzugt einen molekularen Substitutionsgrad MS_{Hydroxyethyl} von 1,5 bis 3,5aufweist;
Methylethylhydroxyethylcellulose (MEHEC), die einen durchschnittlichen Substitutionsgrad DS_{Methyl} von 0,2 bis 2,0 und einen durchschnittlichen Substitutionsgrad DS_{Ethyl} von 0,05 bis 1,5 und bevorzugt einen molekularen Substitutionsgrad MS_{Hydroxyethyl} von 0,2 bis 3,5 aufweist;
Carboxymethylcelluloseether (CMC), der einen durchschnittlichen Substitutionsgrad DS_{Carboxymethyl} von 0,4 bis 1,0 aufweist;
Carboxymethylhydroxyethylcelluloseether (CMHEC), der einen durchschnittlichen Substitutionsgrad DS_{Carboxymethyl} von 0,1 bis 1,0 und bevorzugt einen molekularen Substitutionsgrad MS_{Hydroxyethyl} von 0,8 bis 3,5 aufweist;
Carboxymethylhydroxypropylcelluloseether (CMHPC), der einen durchschnittlichen Substitutionsgrad DS_{carboxymethyl} von 0,1 bis 1,0 und bevorzugt einen molekularen Substitutionsgrad MS_{Hydroxpropyl} von 0,8 bis 3,3 aufweist;
Carboxymethylmethylcelluloseether (CMMC), der einen durchschnittlichen Substitutionsgrad DS_{carboxymethyl} von 0,005 bis 1,0 aufweist und bevorzugt einen durchschnittlichen Substitutionsgrad DS_{Methyl} von 0,2 bis 2,0, aufweist; Carboxymethylmethylhydroxyethylcelluloseether (CMMHEC), der einen durchschnittlichen Substitutionsgrad DS_{carboxymethyl} von 0,005 bis 1,0, einen durchschnittlichen Substitutionsgrad DS_{Methyl} von 0,2 bis 2,0, aufweist; und bevorzugt einen molekularen Substitutionsgrad MS_{Hydroxethyl} von 0,8 bis 3,5 aufweist;
Carboxymethylmethylhydroxypropylcelluloseether (CMMHPC), der einen durchschnittlichen Substitutionsgrad DS_{Carboxymethyl} von 0,005 bis 1,0, einen durchschnittlichen Substitutionsgrad DS_{Methyl} von 0,2 bis 2,0, aufweist; und bevorzugt einen molekularen Substitutionsgrad MS_{Hydroxpropyl} von 0,8 bis 3,3 aufweist;
Sulfoethylmethylhydroxyethylcelluloseether (SEMHEC), der einen durchschnittlichen Substitutionsgrad DS_{sulfoethyl} von 0,005 bis 0,01, einen durchschnittlichen Substitutionsgrad DS_{Methyl} von 0,2 bis 2,0, und bevorzugt einen molekularen Substitutionsgrad MS_{Hydroxyethyl} von 0,1 bis 0,3 aufweist;
Sulfoethylmethylcelluloseether (SEMC), der einen durchschnittlichen Substitutionsgrad DS_{sulfoethyl} von 0,005 bis 0,01, und bevorzugt einen durchschnittlichen Substitutionsgrad DS_{Methyl} von 0,2 bis 2,0, aufweist;
Sulfoethylmethylhydroxypropylcelluloseether (SEMHPC), der einen durchschnittlichen Substitutionsgrad DS_{sulfoethyl} von 0,005 bis 0,01, einen durchschnittlichen Substitutionsgrad DS_{Methyl} von 0,2 bis 2,0, und bevorzugt einen molekularen Substitutionsgrad MS_{Hydroxypropyl} von 0,1 bis 0,3 aufweist und/oder
Methylhydroxyethylhydroxypropylcelluloseether (MHEHPC), der einen durchschnittlichen Substitutionsgrad DS_{Methyl} von 1,2 bis 2,0, bevorzugt 1,4 bis 1,8 und bevorzugt einen molekularen Substitutionsgrad MS_{Hydroxyethyl} von 0,1 bis 1,0, besonders bevorzugt 0,3 bis 0,5, und bevorzugt einen molekularen Substitutionsgrad MS_{Hydroxypropyl} von 0,1 bis 1,0, stärker bevorzugt von 0,15 bis 0,7 aufweist.

Das Polysaccharid oder ein Derivat davon ist bevorzugt ausgewählt aus Guarkernmehl, Guarether, Johannisbrotkernmehl, Karrageen und Pektin.

In einer bevorzugten Ausführungsform hat der Celluloseether und/oder das Polysaccharid, insbesondere der Celluloseether eine Wasserlöslichkeit von mindestens 2 g/l Wasser bei 20 °C, stärker bevorzugt mindestens 5 g/l Wasser.

Der Celluloseether hat bevorzugt einen mittleren Polymerisationsgrad von 10-5.000. Der Polymerisationsgrad wird gemessen nach Pulps gemäß ISO 5351 - *"Determination of Limiting Viscosity Number in Cupriethylenediamine (CED) Solution".*

Die Viskosität der Celluloseether liegt bevorzugt bei 1-500.000 mPa s, stärker bevorzugt 3-300.000 mPa s, noch stärker bevorzugt 6-60.000 mPa s gemessen nach Höppler; 2%ige Lösung, 20 °C, 20 °dH.

Der Fettalkohol bzw. das Dimer oder Trimer (Komponente (ii)) ist bevorzugt synthetischen oder natürlichen Ursprungs. Bevorzugt werden natürliche Fettalkohole aus Pflanzen- bzw. Tierfetten hergestellt. Synthetische Fettalkohole werden durch den Fachmann geläufige Verfahren hergestellt. Synthetisch hergestellte Fettalkohole umfassen auch sogenannte Oxoalkohole.

Bevorzugt handelt es sich bei dem Fettalkohol um ein C₆₋₃₀-Alkanol, C₆₋₃₀-Alkenol, C₆₋₃₀-Alkandienol, C₆₋₃₀-Alkantrienol oder Oxo-C₆₋₃₀-Alkohol, stärker bevorzugt um ein C₁₂₋₂₂-Alkanol, C₁₂₋₂₂-Alkenol, C₁₂₋₂₂-Alkandienol oder C₁₂₋₂₂-Alkantrienol. *"Alkan"* im Sinne der vorliegenden Erfindung ist ein Kohlenwasserstoffrest, der entweder geradkettig oder verzweigt sein kann. Bevorzugt werden geradkettige Kohlenwasserstoffreste verwendet. Der Fettalkohol ist bevorzugt ein primärer Alkohol. C=C Doppelbindungen im Alkandienol bzw. Alkantrienol können alternierend oder statistisch verteilt sein.

Komponente (i) und Komponente (ii) haben gemeinsam eine Restfeuchte von 0-20 Gew.-%, bevorzugt 0-15 Gew.-%, noch stärker bevorzugt 0,01-10 Gew.-%, bezogen auf die Gesamtmasse der Komponenten (i) und (ii).

In einer bevorzugten Ausführungsform liegt das Gewichtsverhältnis von Komponente (i) zu Komponente (ii) im Bereich von 1:15 bis 15:1, bevorzugt 1:4 bis 4:1.

Bevorzugt ist der Anteil der Komponenten (i) und (ii) in der Gesamtzubereitung zwischen 0,1-100 Gew.-%, stärker bevorzugt 0,1-1,0 Gew.-%, noch stärker bevorzugt 0,2-0,5 Gew.-% bezogen auf die Gesamtmasse der Zubereitung. Bevorzugt ist der Anteil der Komponenten (i) und (ii) in der Gesamtzubereitung zwischen 0,1-0,5 Gew.-%, stärker bevorzugt 0,2-0,4 Gew.-%, sofern die Zubereitung Komponenten (iii) und (iv) enthält. Sofern die Zubereitung nur die Komponenten (i) und (ii) (also nicht die Komponenten (iii) und (iv)) umfasst, liegt der Anteil dieser Komponenten bevorzugt bei 80-100 Gew.-%, stärker bevorzugt bei 90-100 Gew.-% bezogen auf die Gesamtmasse der Zubereitung. Die Zubereitung kann ferner mindestens ein hydraulisches Bindemittel enthalten. Als hydraulische Bindemittel werden insbesondere Zement, gebrannter Kalk, Puzzolan, Trass und Gips, bevorzugt Zement verwendet.

Die Zubereitung kann ferner mindestens eine Gesteinskörnung enthalten. Als geeignete Gesteinskörnung wird bevorzugt Sand, Kies und/oder synthetische Füllstoffe verwendet.

Die Zubereitung kann ferner eine weitere Komponente (v) enthalten, welche mindestens einen zusätzlichen Celluloseether umfasst. Zusätzliche Celluloseether sind bevorzugt Methylhydroxyethyl- und Methylhydroxypropylcelluloseether.

In einer bevorzugten Ausführungsform ist die Zubereitung formuliert als Trockenmörtel, Fliesenkleber, Putzsystem, Spachtelmasse und Trockenmörtel für Wärmedämmverbundsysteme. In diesem Fall kann die Zubereitung neben den Komponenten (i) bis (iv) noch weitere dem Fachmann bekannte Hilfsmittel enthalten, wie z. B. Dispersionspulver, Stärkederivate, Zement-Beschleuniger, anorganische Verdicker, Fasern, Entschäumer als auch Luftporenbildner.

In einem anderen Aspekt, betrifft die vorliegende Erfindung ein Verfahren zur Herstellung der erfindungsgemäßen Zubereitung umfassend die Schritte
(a) Mischen mindestens eines Celluloseethers und/oder mindestens eines Polysaccharids oder eines Derivats davon, mindestens eines Fettalkohols oder Dimers oder Trimers davon und mindestens eines Lösungsmitttels,
(b) Behandeln der nach Schritt (a) erhaltenen Mischung unter Scherung ggf. bei erhöhten Temperaturen,
(c) Trocknen und gegebenenfalls Zerkleinern der nach Schritt (b) erhaltenen Mischung und
(d) ggf. Mischen der nach Schritt (c) erhaltenen Mischung mit mindestens einem hydraulischen Bindemittel und gegebenenfalls mit mindestens einer Gesteinskörnung.

Bevorzugt wird in Schritt (a) Wasser als Lösungsmittel verwendet.

Bevorzugt wird im Schritt (a) eine Dispersion, bevorzugt eine Emulsion, insbesondere bevorzugt eine Öl-in-Wasser Emulsion von Fettalkohol in Wasser verwendet. Bevorzugt hat die Suspension, insbesondere die Emulsion einen Fettalkoholgehalt von 5-40 Gew.-% Fettalkohol bezogen auf die Gesamtmasse der Emulsion.

Schritt (b) des erfindungsgemäßen Verfahrens erfolgt bevorzugt unter Einrühren oder Einkneten. Schritt (b) kann bei erhöhten Temperaturen, insbesondere bei Temperaturen zwischen 20-45 °C, besonders bevorzugt bei 25-40 °C erfolgen.

Das Verfahren kann unterschieden werden in Ausführungsformen in denen die Komponenten in Schritt (b) vollständig gelöst werden (Variante 1) und bei denen der Fettalkohol bzw. das Dimer oder Trimer davon in Gegenwart des Lösungsmittels in den Celluloseether und/oder das Polysaccharid eingeknetet wird (Variante 2). In letzterem Fall wird bevorzugt die Fettalkoholemulsion solange in den Celluloseether und/oder das Polysaccharid eingeknetet, bis dieser(s) vollständig benetzt ist. Die jeweiligen Mischungsverhältnisse zwischen Celluloseether/Polysaccharid, Fettalkohol und Wasser können je nach Art des Fettalkohols und des Celluloseethers/Polysaccharids eingestellt werden, mit der Maßgabe, dass das Gewichtsverhältnis von Komponente (i) zu Komponente (ii) (im jeweils trockenen Zustand) bevorzugt im Bereich von 1:15 bis 15:1, bevorzugt 1:4 bis 4:1 liegt.

Der Anteil an Celluloseether und/oder Polysaccharid in der Zubereitung nach Variante 1 beträgt bevorzugt 5-50 Gew.-%, stärker bevorzugt etwa 25-45 Gew.-%, noch stärker bevorzugt etwa 30-35 Gew.-% bezogen auf das Gesamtgewicht von Celluloseether und/oder Polysaccharid und Fettalkohol (trocken). Der Anteil an Celluloseether und/oder Polysaccharid in der Zubereitung nach Variante 2 beträgt bevorzugt etwa 50-99,9 Gew.-%, bevorzugt etwa 70-95 Gew.-%, noch stärker bevorzugt etwa 80-90 Gew.-% bezogen auf das Gesamtgewicht der Komponenten (i) und (ii) (trocken).

Der Anteil an Fettalkohol (trocken) in der erfindungsgemäßen Zubereitung nach Variante 1 beträgt bevorzugt 50-95 Gew.-%, stärker bevorzugt 55-75 Gew.-%, noch stärker bevorzugt 65-70 Gew.-% bezogen auf das Gesamtgewicht der Komponenten (i) und (ii) (trocken).

Der Anteil an Fettalkohol (trocken) in der erfindungsgemäßen Zubereitung nach Variante 2 beträgt bevorzugt etwa 0,1-50 Gew.-%, stärker bevorzugt etwa 5-30 Gew.-%, noch stärker bevorzugt etwa 10-20 Gew.-% bezogen auf das Gesamtgewicht der Komponenten (i) und (ii) (trocken).

Variante 1 und 2 eignen sich bevorzugt für Celluloseether, die eine Viskosität nach Höppler von 1-500.000 mPa s, bevorzugt 3-300.000 mPa s, besonders bevorzugt 6-60.000 mPa s aufweisen.

Die anschließende Trocknung des nach Schritt (b) erhaltenen Produkts erfolgt bevorzugt bei erhöhter Temperatur insbesondere im Bereich von 20-45 °C, stärker bevorzugt 25-40 °C, gegebenenfalls unter Vakuum. Entsprechende Trocknungsprozesse sind dem Fachmann bekannt. Das getrocknete Produkt kann gegebenenfalls noch durch den Fachmann bekannte Verfahren zerkleinert und/oder gesiebt werden. Bevorzugt liegt nach Schritt (c) ein rieselfähiges Pulver mit einer durchschnittlichen Partikelgröße von d₅₀ von 0,01 bis 1.000 µm vor.

Bevorzugt liegt der Restfeuchtegehalt der nach Schritt (c) enthaltenen Mischung im Bereich von 0-20 Gew.-%, stärker bevorzugt von 0-15 Gew.-%, noch stärker bevorzugt von 0,01-10 Gew.-% bezogen auf die Gesamtmasse der Mischung.

Die vorliegende Erfindung betrifft auch eine Zubereitung erhältlich durch das erfindungsgemäße Verfahren.

In einem weiteren Aspekt betrifft die Erfindung auch die Verwendung der erfindungsgemäßen Zubereitung als Baustoff oder als Additiv für Baustoffe. Die erfindungsgemäße Zubereitung wird insbesondere als Additiv für Baustoffe verwendet, wenn die Zubereitung frei von Komponente (iii) und (iv) ist. Das Additiv kann Baustoffen durch einfaches Mischen im trockenen Zustand beigemengt werden. Bevorzugte Baustoffe sind ausgewählt aus Mörtelsystemen, insbesondere für Wärmedämmverbundsysteme, Spachtelmassen, Putzsystemen und Fliesenklebern. Sofern die erfindungsgemäße Zubereitung als Additiv verwendet wird, wird das Additiv den Baustoffen bevorzugt in Mengen von 0,05-0,6 Gew.-%, stärker bevorzugt 0,1-0,5 Gew.-%, noch stärker bevorzugt 0,15-0,5 Gew.-%, noch stärker bevorzugt 0,15-0,45 Gew.-% eingesetzt.

Die erfindungsgemäßen Zubereitungen bzw. Additive haben eine überraschende Wirkung auf die offene Zeit, die Benetzung, die Verarbeitungszeit und die Haftzugwerte in Baustoffen, insbesondere zementären Fliesenklebern. Derzeit wird davon ausgegangen, dass eine innige Vermischung von Celluloseether und/oder Polysaccharid und Fettalkohol in den erfindungsgemäßen Zubereitungen eine Migration von Fettalkohol an die Oberfläche des Baustoffes während der Verarbeitung ermöglicht. Ohne an eine Theorie gebunden zu sein, reichert sich Celluloseether aufgrund seiner tensidischen Eigenschaften zwischen Luftporen und feuchtem Mörtel sowie an der Oberfläche des Mörtels an (Jenni et al. 2004). Celluloseether kann demzufolge als ein Transportmedium angesehen werden. Durch die innige Vermischung von Celluloseether und Fettalkohol, kann der Fettalkohol mit dem Celluloseether verschmolzen sein oder sich um Celluloseether-Partikel anreichern, wobei der Fettalkohol leichter an die Oberfläche migrieren und somit seine positiven Eigenschaften, wie z. B. Verlängerung der Benetzungszeit und Erhöhung der offenen Zeit, entfalten kann. Eine andere Migrationsmöglichkeit für den mit Fettalkohol vermischten Celluloseether kann der bekannte Entschäumungseffekt der Fettalkohole (siehe US 5 807 502) darstellen. Wie bereits erwähnt, hat Celluloseether tensidische Eigenschaften und reichert sich zwischen Luftporen und feuchtem Mörtel an. Da durch die entschäumende Wirkung der Fettalkohole, Luft an die Mörteloberfläche steigen kann, kann zwangsläufig auch der mit Fettalkohol vermischte Celluloseether leichter an die Oberfläche migrieren, wobei der Fettalkohol so zur Verlängerung der Benetzungszeit bzw. offenen Zeit beiträgt. Überraschenderweise konnten keine Nachteile, wie z. B. beschleunigte oder stark verzögerte Zementreaktion bzw. verringerte Frühfestigkeiten festgestellt werden.

Die vorliegende Erfindung wird anhand von Beispielen illustriert, aber nicht darauf beschränkt:

### Beispiele:

### Herstellung der erfindungsgemäßen Zubereitungen:

### Variante 1:

Eine wässrige Emulsion eines Gemisches natürlicher C₁₄₋₂₀ Fettalkohole (Loxanol OT 5840; Konzentration der Fettalkohole in der Emulsion: -20 Gew.-%, BASF, Ludwigshafen) wurde mit Wasser 1:1 verdünnt und unter Rühren mittels eines Laborrührers (500 UPM) solange verrührt, bis eine homogene Lösung erreicht wurde. Anschließend wurde Tylose MOBS 6 P4 in einer Konzentration von 5 Gew.-% unter Rühren mit höherer Umdrehungszahl (700 UPM) auf die Lösung gegeben (C1-1a). Eine andere Möglichkeit den Celluloseether in die Emulsion einzuarbeiten ist die direkte Zugabe des Celluloseethers unter Rühren mittels Laborrührer (700 UPM) in die unverdünnte Emulsion (C1-1b). Nach vollständiger Lösung des Celluloseethers (ca. 2h) wurde die Lösung bei beiden Vorgehensweisen in eine flache Form gegossen und bei 40°C getrocknet. Nach vollständiger Trocknung wurde die erfindungsgemäße Zubereitung mittels eines Pistills in einem Mörser fein aufgemahlen. Es wurde ein rieselfähiges Pulver bzw. feines Granulat erhalten. Auf analoge Weise wurde auch eine erfindungsgemäße Zubereitung mit Tylose MH 50 G4 hergestellt, welche im Folgenden als C1-2 bezeichnet wird.

### Variante 2:

Loxanol OT 5840 wurde in einem Verhältnis 1:1 mittels eines Laborkneters auf einen Celluloseether, hier Tylose MHF 15000 P4, eingeknetet. Der Knetvorgang betrug ca. 60 Minuten. Anschließend wurde die Mischung bei ca. 40°C unter Vakuum getrocknet. Die erhaltene erfindungsgemäße Zubereitung lag als rieselfähiges Pulver vor und wird im Folgenden als C2-1 bezeichnet.

Im Folgenden sind Prozente, als Gewichtsprozent zu verstehen, soweit nicht anders angegeben oder aus dem Zusammenhang ersichtlich. "Atro" steht für "absolut trocken" und "lutro" für "lufttrocken". Folgende Komponenten wurden eingesetzt:

### Celluloseether (CE):

**CE1:** Tylose MOBS 6 P4, MHPC, DS 1,8, MS 0,28, Viskosität (2% atro, 20 °C, Ubbelohde) 4,8 - 7,2 mPa s
   Feinpulver (Luftstrahlsieb, < 0,125 mm: 95%, < 0,063 mm: 50%)
**CE2:** Tylose MH 50 G4, MHEC, DS 1,5, MS 0,2, Viskosität (2,85% atro, 20 °C, 20°dH, Brookfield RV, Spindel 1) 150 - 250 mPa s
   Granulat (Luftstrahlsieb, < 0,5 mm: 95%, < 0,125 mm: 30%)
**CE3:** Tylose MHF 15000 P4, MHEC, DS 1,7, MS 0,2, Viskosität (1,9% atro, 20°C, 20°dH, Brookfield RV, Spindel 5) 11000 - 15000 mPa s Feinpulver (Luftstrahlsieb, < 0,125 mm: 90%, < 0,100 mm: 70%)
**CE4:** Tylose MHF 10015 P4 , MHEC, DS 1,7, MS 0,2, Viskosität (1,9% atro, 20°C, 20°dH, Brookfield RV, Spindel 5) 8000 - 12000 mPa s Feinpulver (Luftstrahlsieb, < 0,125 mm: 90%, < 0,100 mm: 70%)

### Fettalkohol und Celluloseether-Fettalkohol-Compound:

**FA auf Träger (Referenz 1):** Loxanol OT 5900 (Handelsprodukt der Firma BASF Ludwigshafen), Fettalkohol aufgezogen auf eine silikatische Trägersubstanz, pulverförmig, Dichte bei 20°C: ∼ 0,64 g/cm³, Aktivgehalt Fettalkohol: ∼ 44%
**FAE (Referenz 2):** Loxanol OT 5840 (Handelsprodukt der Firma BASF Ludwigshafen), Fettalkohol-Emulsion, Dichte bei 20°C: ∼ 1 g/cm³ ; dyn. Viskosität bei 23°C: ∼ 600 mPa s; Aktivgehalt Fettalkohol: -20 %
**C1-1a, C1-1b sowie C1-2:** Celluloseether-Fettalkohol-Zubereitung der Variante 1, pulverförmig
**C2-1:** Celluloseether-Fettalkohol-Zubereitung der Variante 2, pulverförmig

FA auf Träger als auch FAE stellen die Referenzmaterialien zu den erfindungsgemäßen Zubereitung der Variante 1 und 2 dar. Beide Substanzen sind, wie bereits erwähnt, handelsübliche Produkte der Firma BASF, die unter anderem zur Verlängerung der offenen Zeit in Mörtel- bzw. Dispersionsgebundenen Systemen zum Einsatz kommen. Beide Produkte zeichnen sich durch einen bestimmten Aktivgehalt an Fettalkohol aus, ebenso die erfindungsgemäßen Zubereitung der Variante 1 und 2. Die Konzentrationen beider Referenzen sind so gewählt, dass sie dem Aktivgehalt an Fettalkohol in der erfindungsgemäßen Zubereitung der Variante 1 und 2 entsprechen.

Alle Fliesenklebermischungen (nachfolgend als **FK** bezeichnet) enthalten entweder unmodifizierten Celluloseether, Tylose MHF 15000 P4, oder modifizierten Celluloseether, Tylose MHF 10015 P4, in einer Konzentration von 0,4 Gew.-%. Zusätzlich zu diesen Celluloseethern enthalten die Fliesenklebermischungen entweder Referenz 1, Referenz 2, Referenz 3 oder eben die erfindungsgemäßen Zubereitung der Variante 1 und 2.

Folgende Fliesenklebermischungen beinhalten die Referenz 1:
FK 5, FK 6, FK 7, FK 17, FK 21, FK 22, FK 23, FK 31, FK 32 und FK 33

Referenz 1 wurde auch in einer höheren Konzentration, wie von BASF empfohlen (0,5 - 2 Gew.-% bezogen auf die gesamte Rezeptur), eingesetzt, die durch Mischung FK 4, FK 20 und FK 30 repräsentiert werden.

Folgende Fliesenklebermischungen beinhalten die Referenz 2:
FK 8, FK 9, FK 10, FK 18, FK 24, FK 25, FK 26, FK 34, FK 35 und FK 36

Während Referenz 1 der Trockenmörtelmischung beigemischt werden konnte, wurde Referenz 2 dem Anmachwasser des Trockenmörtels beigesetzt und einige Minuten gerührt. Eine Zugabe der Referenz 2 direkt zum Trockenmörtel war nicht möglich.

Weitere Referenzen, Referenz 3 und Referenz 4, stellen die Mischungen FK 2 und FK 3 dar, die zusätzlich zum eigentlichen Celluloseether den Celluloseether enthalten, der in den erfindungsgemäßen Zubereitungen der Variante 1 zum Einsatz kommt; Tylose MOBS 6 P4 bzw. MH 50 G4. Die Konzentration dieser Celluloseether ist ebenfalls den in Zubereitung der Variante 1 enthaltenen Celluloseether angepasst.

Referenz 3 und Referenz 4 wurden ebenfalls mit Referenz 1 oder Referenz 2 zusammen verwendet, um symbiotische Effekte ein- oder ausschließen zu können.

Wie zu erkennen, sind die Konzentrationen der Referenzen so gewählt, dass sie mit den erfindungsgemäßen Zubereitungen der Varianten 1 und 2 vergleichbar sind. Dadurch lassen sich die durch die erfindungsgemäßen Zubereitungen der Variante 1 und 2 erbrachten Vorteile gut verifizieren.

### Prüfprodukte

**Tabelle 1: Zusammensetzungen der pulverförmigen Zubereitung der Variante 1 C1-1a, C1-1b, C1-2 sowie C2-1 der Variante 2 (Angaben in Gewichtsteilen)**

| **Produkt Nr.** | **C1-1a** | **C1-1b** | **C1-2** | **C2-1** |
|---|---|---|---|---|
| **CE 1** | 33 | 33 | | |
| **CE 2** | | | 33 | |
| **CE 3** | | | | 80 |
| **Fettalkohol Loxanol OT5840 Trockengewicht** | 67 | 67 | 67 | 20 |

### Prüfrezepturen

**Tabelle 2: Zusammensetzungen der Prüfmischungen (Gewichtsteile) mit unmodifiziertem Celluloseether MHF 15000 P4, FA auf Träger (Fettalkohol-Emulsion auf silikatischem Träger; Referenz 1) sowie FAE (Fettalkohol-Emulsion; Referenz 2) berechnet auf den Aktivgehalt an Fettalkohol in der Emulsion**

| **Referenzen** | | **3** | **4** | **1** | **1** | **1+3** | **1+4** | **2** | **2+3** | **2+4** | | | | | |
|---|---|---|---|---|---|---|---|---|---|---|---|---|---|---|---|
| **Prüfmischung** | **FK 1** | **FK 2** | **FK 3** | **FK 4** | **FK 5** | **FK 6** | **FK 7** | **FK 8** | **FK 9** | **FK 10** | **FK 11** | **FK 12** | **FK 13** | **FK 14** | **FK 15** |
| **Zement CEM I 52,5 N** | 38 | 38 | 38 | 38 | 38 | 38 | 38 | 38 | 38 | 38 | 38 | 38 | 38 | 38 | 38 |
| **Kalksteinmehl 0,1 mm** | 5 | 5 | 5 | 5 | 5 | 5 | 5 | 5 | 5 | 5 | 5 | 5 | 5 | 5 | 5 |
| **Quarzsand 0,1 - 0,5 mm** | 57 | 57 | 57 | 57 | 57 | 57 | 57 | 57 | 57 | 57 | 57 | 57 | 57 | 57 | 57 |
| **Tylose MHF 15000 P4** | 0,4 | 0,4 | 0,4 | 0,4 | 0,4 | 0,4 | 0,4 | 0,4 | 0,4 | 0,4 | 0,4 | 0,4 | 0,4 | 0,335 | 0,335 |
| **Tylose MOBS 6 P4** | | 0,066 | | | | 0,066 | | | 0,066 | | | | | | |
| **Tylose MH 50 G4** | | | 0,066 | | | | 0,066 | | | 0,066 | | | | | |
| **FA auf Träger** | | | | 1,2 | 0,305 | 0,305 | 0,305 | | | | | | | | |
| **FAE** | | | | | | | | 0,667 | 0,667 | 0,667 | | | | | |
| **C1-1a** | | | | | | | | | | | 0,2 | | | 0,165 | |
| **C1-1b** | | | | | | | | | | | | 0,2 | | | |
| **C1-2** | | | | | | | | | | | | | 0,2 | | 0,165 |
| **Wasser** | 23 | 23 | 23 | 23 | 23 | 23 | 23 | 23 | 23 | 23 | 23 | 23 | 23 | 23 | 23 |

### Prüfrezepturen

**Tabelle 3: Zusammensetzungen der Prüfmischungen (Gewichtsteile) mit unmodifiziertem Celluloseether MHF 15 000 P4, FA auf Träger (Fettalkohol-Emulsion auf silikatischem Träger; Referenz 1) sowie FAE (Fettalkohol-Emulsion; Referenz 2) berechnet auf den Aktivgehalt an Fettalkohol in der Emulsion**

| **Referenzen** | | **1** | **2** |
|---|---|---|---|
| **Prüfmischung** | **FK 16** | **FK 17** | **FK 18** |
| **Zement CEM I 52,5 N** | 38 | 38 | 38 |
| **Kalksteinmehl 0,1 mm** | 5 | 5 | 5 |
| **Quarzsand 0,1 - 0,5 mm** | 57 | 57 | 57 |
| **Tylose MHF 15000 P4** | | 0,4 | 0,4 |
| **FA auf Träger** | | 0,25 | |
| **FAE** | | | 0,55 |
| **C2-1** | 0,5 | | 20 |
| **Wasser** | 23 | 23 | 23 |

### Prüfrezepturen

**Tabelle 4: Zusammensetzungen der Prüfmischungen (Gewichtsteile) mit modifiziertem Celluloseether MHF 10015 P4, FA auf Träger (Fettalkohol-Emulsion auf silikatischem Träger; Referenz 1) sowie FAE (Fettalkohol-Emulsion; Referenz 2) berechnet auf den Aktivgehalt an Fettalkohol in der Emulsion mit 30 Gew.-% Wasser**

| **Referenzen** | | **1** | **1** | **1+3** | **1+4** | **2** | **2+3** | **2+4** | | |
|---|---|---|---|---|---|---|---|---|---|---|
| **Prüfmischung** | **FK 19** | **FK 20** | **FK 21** | **FK 22** | **FK 23** | **FK 24** | **FK 25** | **FK 26** | **FK 27** | **FK 28** |
| **Zement CEM I 52,5** | 38 | 38 | 38 | 38 | 38 | 38 | 38 | 38 | 38 | 38 |
| **Kalksteinmehl 0,1 mm** | 5 | 5 | 5 | 5 | 5 | 5 | 5 | 5 | 5 | 5 |
| **Quarzsand 0,1** - **0,5 mm** | 57 | 57 | 57 | 57 | 57 | 57 | 57 | 57 | 57 | 57 |
| **Vinnapas 5028E** | 5 | 5 | 5 | 5 | 5 | 5 | 5 | 5 | 5 | 5 |
| **Tylose MHF 10015 P4** | 0,4 | 0,4 | 0,4 | 0,4 | 0,4 | 0,4 | 0,4 | 0,4 | 0,4 | 0,4 |
| **Tylose MOBS 6 P4** | | | | 0,066 | | | 0,066 | | | |
| **Tylose MH 50 G4** | | | | | 0,066 | | | 0,066 | | |
| **FA auf Träger** | | 1,2 | 0,305 | 0,305 | 0,305 | | | | | |
| **FAE** | | | | | | 0,667 | 0,667 | 0,667 | | |
| **C1-1a** | | | | | | | | | 0,2 | |
| **C1-2** | | | | | | | | | | 0,2 |
| **Wasser** | 30 | 30 | 30 | 30 | 30 | 30 | 30 | 30 | 30 | 30 |

### Prüfrezepturen

**Tabelle 5: Zusammensetzungen der Prüfmischungen (Gewichtsteile) mit modifiziertem Celluloseether MHF 10015 P4, FA auf Träger (Fettalkohol-Emulsion auf silikatischem Träger; Referenz 1) sowie FAE (Fettalkohol-Emulsion; Referenz 2) berechnet auf den Aktivgehalt an Fettalkohol in der Emulsion mit 24 Gew.-% Wasser**

| **Referenzen** | | **1** | **1** | **1+3** | **1+4** | **2** | **2+3** | **2+4** | | |
|---|---|---|---|---|---|---|---|---|---|---|
| **Prüfmischung** | **FK 29** | **FK 30** | **FK 31** | **FK 32** | **FK 33** | **FK 34** | **FK 35** | **FK 36** | **FK 37** | **FK 38** |
| **Zement CEM I 52,5 N** | 38 | 38 | 38 | 38 | 38 | 38 | 38 | 38 | 38 | 38 |
| **Kalksteinmehl 0,1 mm** | 5 | 5 | 5 | 5 | 5 | 5 | 5 | 5 | 5 | 5 |
| **Quarzsand 0,1** - **0,5 mm** | 57 | 57 | 57 | 57 | 57 | 57 | 57 | 57 | 57 | 57 |
| **Vinnapas 5028E** | 5 | 5 | 5 | 5 | 5 | 5 | 5 | 5 | 5 | 5 |
| **Tylose MHF 10015 P4** | 0,4 | 0,4 | 0,4 | 0,4 | 0,4 | 0,4 | 0,4 | 0,4 | 0,4 | 0,4 |
| **Tylose MOBS 6 P4** | | | | 0,066 | | | 0,066 | | | |
| **Tylose MH 50 G4** | | | | | 0,066 | | | 0,066 | | |
| **FA auf Träger** | | 1,2 | 0,305 | 0,305 | 0,305 | | | | | |
| **FAE** | | | | | | 0,667 | 0,667 | 0,667 | | |
| **C1-1a** | | | | | | | | | 0,2 | |
| **C1-2** | | | | | | | | | | 0,2 |
| **Wasser** | 24 | 24 | 24 | 24 | 24 | 24 | 24 | 24 | 24 | 24 |

Des Weiteren wurden Versuche zur Herstellung der erfindungsgemäßen Zubereitungen der Variante 1 mit hochviskosen Celluloseethern durchgeführt, wobei die Zubereitungen ebenfalls in selber Fliesenkleber- Formulierung auf Tauglichkeit bezüglich Benetzungszeit geprüft wurden. Die Celluloseether mussten in einer geringeren Konzentration, entsprechend ihrer Viskosität, in die Alkohol-Emulsion eingerührt werden, da bei Konzentration von 5% eine Homogenisierung nicht möglich war.

Folgende Celluloseether wurden verwendet:
**CE 5:** Tylose MH 15000 YP4, MHEC anquellverzögert, DS 1,6, MS 0,15, Viskosität (1,9% atro, 20°C, 20°dH, Brookfield RV, Spindel 5) 11000 - 15000 mPa s
   Feinpulver (Luftstrahlsieb, < 0,125 mm: 90%, < 0,100 mm: 70%)
**CE 6:** Tylose H 60000 YP2, HEC, MS 2,0, Viskosität (1,0% atro, 25°C, destilliertes Wasser, Brookfield LV, Spindel 3) 2600 - 3400 mPa s
   Feinpulver (Luftstrahlsieb,<0,180 mm: 85%)
**CE7:** Tylose MHF 100000 P4, MHEC, DS 1,7, MS 0,2, Viskosität (1,0% atro, 20°C, 20°dH, Brookfield RV, Spindel 4) 4100 - 5500 mPa s
   Feinpulver (Luftstrahlsieb, < 0,125 mm: 90%, < 0,100 mm: 70%)
**CE 8:** Tylose MHS 300000 P3, MHEC, DS 1,7, MS 0,25, Viskosität (1,0% atro, 20°C, 20°dH, Brookfield RV, Spindel 5) 8000 - 11000 mPa s
   Feinpulver (Luftstrahlsieb, < 0,125 mm: 75%, < 0,063 mm: < 40%)

### Prüfprodukte

**Tabelle 6: Zusammensetzungen der pulverförmigen Zubereitungen der Variante 1 C1-1a, C1-1b, C1-2 sowie C2-1 der Variante 2 (Angaben in Gewichtsteile)**

| **Produkt Nr.** | **C1-3** | **C1-4** | **C1-5** | **C1-6** |
|---|---|---|---|---|
| **CE 5** | **12** | | | |
| **CE 6** | | **12** | | |
| **CE 7** | | | **6** | |
| **CE 8** | | | | **6** |
| **Fettalkohol Loxanol OT5840 Trockengewicht** | **88** | **88** | **94** | **94** |

### Prüfrezepturen

**Tabelle 7: Zusammensetzungen der Prüfmischungen (Gewichtsteile) mit unmodifiziertem Celluloseether MHF 15 000 P4, FA auf Träger (Fettalkohol-Emulsion auf silikatischem Träger; Referenz 1) sowie FAE (Fettalkohol-Emulsion; Referenz 2) berechnet auf den Aktivgehalt an Fettalkohol in der Emulsion**

| **Prüfmischung** | **FK 39** | **FK 40** | **FK 41** | **FK 42** |
|---|---|---|---|---|
| **Zement CEM I 52,5 N** | 38 | 38 | 38 | 38 |
| **Kalksteinmehl 0,1 mm** | 5 | 5 | 5 | 5 |
| **Quarzsand 0,1** - **0,5 mm** | 57 | 57 | 57 | 57 |
| **Tylose MHF 15000 P4** | 0,4 | 0,4 | 0,4 | 0,4 |
| **C1-3** | 0,2 | | | |
| **C1-4** | | 0,2 | | |
| **C1-5** | | | 0,2 | |
| **C1-6** | | | | 0,2 |
| **Wasser** | 23 | 23 | 23 | 23 |

### Prüfmethoden für Fliesenkleber

Offene Zeit nach ISO 13007 und DIN EN 1346 sowie Lagertests nach DIN EN 1348 bzw. DIN EN 12004.
Die in Tabelle 2 und 3 beschriebenen Fliesenkleber wurden mit Wasser zu einem Mörtel angerührt, wobei 100 Gewichtsteile der beschriebenen Rezepturen mit 23 Gewichtsteilen Anmachwasser für die Versuche mit der unmodifizierten Tylose MHF 15000 P4 und mit 24 bzw. 30 Gewichtsteilen Anmachwasser für die Versuche mit der modifizierten Tylose MHF 10015 P4
versetzt wurden. Der modifizierte Celluloseether kommt in hochwertigen Fliesenklebern (C2TE (S1)) zum Einsatz. Normalerweise ist der Wasseranspruch aufgrund der hohen Modifizierung des Celluloseethers recht hoch. Um die Standfestigkeit T nach DIN EN 1308 des Fliesenklebers zu gewährleisten (0,5 mm zum Erreichen des T), musste der Wasserbedarf auf 24 Gewichtsteile bei Einsatz der erfindungsgemäßen Zubereitung reduziert werden. Zunächst wurde die Mischung 30 Sekunden auf niedrigster Stufe gerührt, anschließend 1 Minute reifen gelassen, wiederum 1 Minute gerührt, 5 Minuten reifen gelassen und zuletzt nochmals 15 Sekunden auf niedriger Stufe geschert. Anschließend wurde der Mörtel auf eine Betonplatte mittels Zahnkelle appliziert (nach ISO 13007). Die Benetzung wurde gemessen, indem in das Mörtelbett alle 5 Minuten Steingutfliesen (5 X 5 cm) eingelegt, 30 Sekunden lang mit 2 kg beschwert und dann aus dem Mörtelbett aufgenommen wurden. Die Benetzung der Rückseite der Fliesen wurde in % angegeben. Eine Benetzung ≥ 50% der Fliesenrückseite muss erreicht werden, um von einer guten offenen Zeit bzw. Benetzbarkeit zu sprechen. Fig. 1 verdeutlicht wie die Benetzung gemessen wurde.

Die offene Zeit **E** für Fliesenkleber wird bestimmt nach DIN EN 1346 bzw. DIN EN 12004, indem auf eine definierte Betonplatte (hier Solana) der Fliesenkleber mittels Zahnkelle aufgezogen wird. Nach 10, 20, 30, 40, 50 und 60 Minuten Auftragen des Mörtels werden 4 - 8 Steingutfliesen pro Zeiteinheit in das Mörtelbett gelegt und mit einem 2 kg-Gewicht 30 Sekunden lang beschwert. Nachdem nach 60 Minuten die letzten Steingutfliesen in das Mörtelbett appliziert wurden, werden die Platten für 28 Tage bei Normklima (23°C und 50% Luftfeuchte) gelagert. Nach der Lagerung erfolgt die Ermittlung der Haftzugwerte, bei dem die Fliesen mittels Haftzugprüfgerät (Herion) von der Betonplatte gerissen werden. Die Haftzugwerte müssen ≥ 0,5 N/mm² nach 30 Minuten erreichen, um die Norm für einen C1/C2 E- Kleber zu erfüllen. Die ermittelten Werte sind in den Tabellen 6 und 8 aufgelistet.

Die Haftzugwerte der verschiedenen Lagerarten nach DIN EN 1348 bzw. DIN EN 12004 wurden ebenfalls ermittelt. Für einen C1-Kleber müssen die Haftwerte bei ≥ 0,5 N/mm² und für einen C2-Kleber bei ≥ 1,0 N/mm² liegen. Die in Tabelle 7 und 9 aufgelisteten Werte stellen die Haftzugwerte nach Trockenlagerung bzw. Normlagerung (28 Tage bei 23°C und 50% Luftfeuchte), Warmlagerung (14 Tage Normklima, 14 Tage bei 70°C) und Wasserlagerung (1 Woche Normklima, drei Wochen in normtemperiertem Wasser) dar.

**Tabelle 8: Ergebnisse der Benetzung [%] von Fliesenklebern mit und ohne der erfindungsgemäßen Zubereitung der Variante 1 und Variante 2 sowie deren Referenzen**

| **Referenzen** | | **3** | **4** | **1** | **1** | **1+3** | **1+4** | **2** | **2+3** | **2+4** | | | | | | | 1 | **2** |
|---|---|---|---|---|---|---|---|---|---|---|---|---|---|---|---|---|---|---|
| **Prüfmischung** | **FK1** | **FK 2** | **FK 3** | **FK 4** | **FK 5** | **FK 6** | **FK 7** | **FK 8** | **FK 9** | **FK 10** | **FK 11** | **FK 12** | **FK 13** | **FK 14** | **FK 15** | **FK 16** | **FK 17** | **FK 18** |
| **Benetzung 10 Minuten** | 80 | 95 | 90 | 95 | 95 | 95 | 90 | 95 | 95 | 95 | 95 | 95 | 95 | 100 | 100 | 100 | 80 | 95 |
| **Benetzung 15 Minuten** | 45 | 90 | 80 | 90 | 85 | 90 | 85 | 95 | 95 | 90 | 95 | 95 | 95 | 100 | 100 | 95 | 60 | 95 |
| **Benetzung 20 Minuten** | | 45 | 50 | 85 | 40 | 70 | 65 | 90 | 85 | 90 | 90 | 95 | 95 | 100 | 100 | 95 | 60 | 90 |
| **Benetzung 25 Minuten** | | | 35 | 70 | | 55 | 55 | 90 | 85 | 90 | 85 | 95 | 90 | 100 | 95 | 90 | 20 | 85 |
| **Benetzung 30 Minuten** | | | | 45 | | 40 | 45 | 85 | 80 | 80 | 80 | 90 | 85 | 95 | 95 | 90 | | 80 |
| **Benetzung 35 Minuten** | | | | | | | | 80 | 75 | 75 | 80 | 85 | 80 | 95 | 95 | 90 | | 80 |
| **Benetzung 40 Minuten** | | | | | | | | 75 | 70 | 65 | 75 | 80 | 80 | 95 | 95 | 90 | | 70 |
| **Benetzung 45 Minuten** | | | | | | | | 70 | 65 | 65 | 75 | 75 | 75 | 95 | 90 | 90 | | 70 |
| **Benetzung 50 Minuten** | | | | | | | | 60 | 65 | 60 | 75 | 70 | 65 | 85 | 90 | 85 | | 60 |
| **Benetzung 55 Minuten** | | | | | | | | 45 | 40 | 45 | 70 | 70 | 65 | 75 | 80 | 80 | | 40 |
| **Benetzung 60 Minuten** | | | | | | | | | | | 65 | 65 | 50 | 75 | 65 | 70 | | |

Die Mischung FK 1 enthielt nur unmodifizierte Tylose MHF 15000 P4 und zeigte die geringste Benetzung. Nach 15 Minuten waren nur 45% der Fliesenrückseite mit Mörtel bedeckt. Selbiges galt für Mischung FK 2 und FK 3, die zusätzlich zur unmodifizierten Tylose MHF 15000 P4 noch Referenz 3 bzw. Referenz 4 in der Konzentration enthielten, wie in 0,2 Gew.-% der erfindungsgemäßen Zubereitung der Variante 1 enthalten war. Die Benetzung war etwas besser als bei Mischung FK 1, wobei eine Benetzungszeit von 15 Minuten erreicht wurde.

Die Mischung FK 4 enthielt neben der unmodifizierten Tylose MHF 15000 P4 auch Referenz 1 in einer Einsatzmenge von 1,2 Gew.-%. Die Mischung zeigte bis 25 Minuten eine gute Benetzung, erbrachte jedoch ab 30 Minuten nicht mehr die erwünschten 50 % Benetzung der Fliesenrückseite.

Die Mischung FK 5 enthielt zusätzlich zur unmodifizierten Tylose MHF 15000 P4 ebenfalls Referenz 1, jedoch in einer geringeren Konzentration von 0,305 Gew.-%. Die Konzentration des aktiven Fettalkohols war der Konzentration des Fettalkohols angepasst wie sie in 0,2 Gew.-% der Zubereitung der Variante 1 enthalten war. Selbiges galt für Mischung FK 6 und FK 7, die zusätzlich noch Referenz 3 bzw. Referenz 4 in der Konzentration enthielten, wie in 0,2 Gew.-% der erfindungsgemäßen Zubereitung der Variante 1 enthalten war. Die Benetzung beider Mischungen war geringfügig besser als für Mischung FK 5 und erreichte eine Benetzungszeit von immerhin 25 Minuten. Mischung FK 5 erbrachte nur 15 Minuten. Ein leicht verbessernder Effekt beider Celluloseether konnte somit verzeichnet werden.

Die Mischungen FK 8 bis FK 10 enthielten neben der unmodifizierten Tylose MHF 15000 P4 die Referenz 2, die zuvor ins Anmachwasser des Trockenmörtels gegeben werden musste. Die Benetzung der Mischung FK 8 war bedeutend besser und erreichte nach 50 Minuten noch 60% Benetzung, nach 55 Minuten jedoch nur noch 45%. FK 9 und FK 10 enthielten zusätzlich zur Referenz 2 noch Referenz 3 bzw. Referenz 4 in der Konzentration wie sie in der Zubereitung der Variante 1 vorhanden waren. Auch hier zeigte sich eine ähnliche gute Benetzung wie Mischung FK 8.

Die Mischungen FK 11 bis FK 13 enthielten zusätzlich zur unmodifizierten Tylose MHF 15000 P4, die erfindungsgemäße Zubereitung der Variante 1. Die Benetzungszeiten der Mischungen FK 11 und FK 12 zeigten ähnlich hervorragende Werte und erreichten nach 60 Minuten noch 65% Benetzung. Die Mischung FK 13 zeigte ebenfalls gute Werte, erreichte nach 60 Minuten jedoch nur 50% Benetzung.

Die Mischungen FK 14 und FK 15 zeichneten sich dadurch aus, dass der verwendete unmodifizierte Celluloseether MHF 15000 P4 mit der erfindungsgemäßen Zubereitung der Variante 1 vor Zugabe zum Trockenmörtel gemischt wurde. Die Konzentration der erfindungsgemäßen Zubereitung war etwas niedriger, statt 0,2 Gew.-% waren 0,165 Gew.-% enthalten. Die Benetzungszeit war auch hier länger als 60 Minuten, wobei die Fliesenrückseite bis 25 Minuten vollflächig benetzt wurde.

Die Mischungen FK 16 enthielt die erfindungsgemäße Zubereitung der Variante 2 und konnte nochmals bessere Benetzungszeiten erreichen als die Mischungen mit der erfindungsgemäßen Zubereitung der Variante 1. Nach 60 Minuten zeigte sich eine Benetzung von immer noch 70% (Fig. 1).

Die Mischung FK 17 enthielt neben der unmodifizierten Tylose MHF 15000 P4 noch die Referenz 1. Die Konzentrationen beider Substanzen waren an die Konzentrationen von Celluloseether und Fettalkohol wie sie in 0,5 Gew.-% der erfindungsgemäßen Zubereitung der Variante 2 vorkamen, angepasst. Die Benetzungszeiten waren vergleichbar mit der Mischung FK 5.

Die Mischung FK 18 enthielt neben der unmodifizierten Tylose MHF 15000 P4 noch die Referenz 2. Die Konzentrationen beider Substanzen waren auch hier an die Konzentrationen Celluloseether und Fettalkohol wie sie in 0,5 Gew.-% der erfindungsgemäßen Zubereitung der Variante 2 vorkamen, angepasst. Die Benetzungszeiten waren ähnlich gut wie die der Mischung FK 8.

Im Allgemeinen lässt sich eine längere Benetzung von über einer Stunde durch den Einsatz der erfindungsgemäßen Zubereitung der Varianten 1 und 2 erzielen. Im Vergleich zu den Mischungen, die die Referenzen 1 und 2 (Fettalkohol auf einem silikatischen Trägermaterial sowie flüssige Fettalkohol-Emulsion) enthielten, waren die Benetzungszeiten länger, und die Fliesenrückseite war großflächiger von Fliesenkleber benetzt.

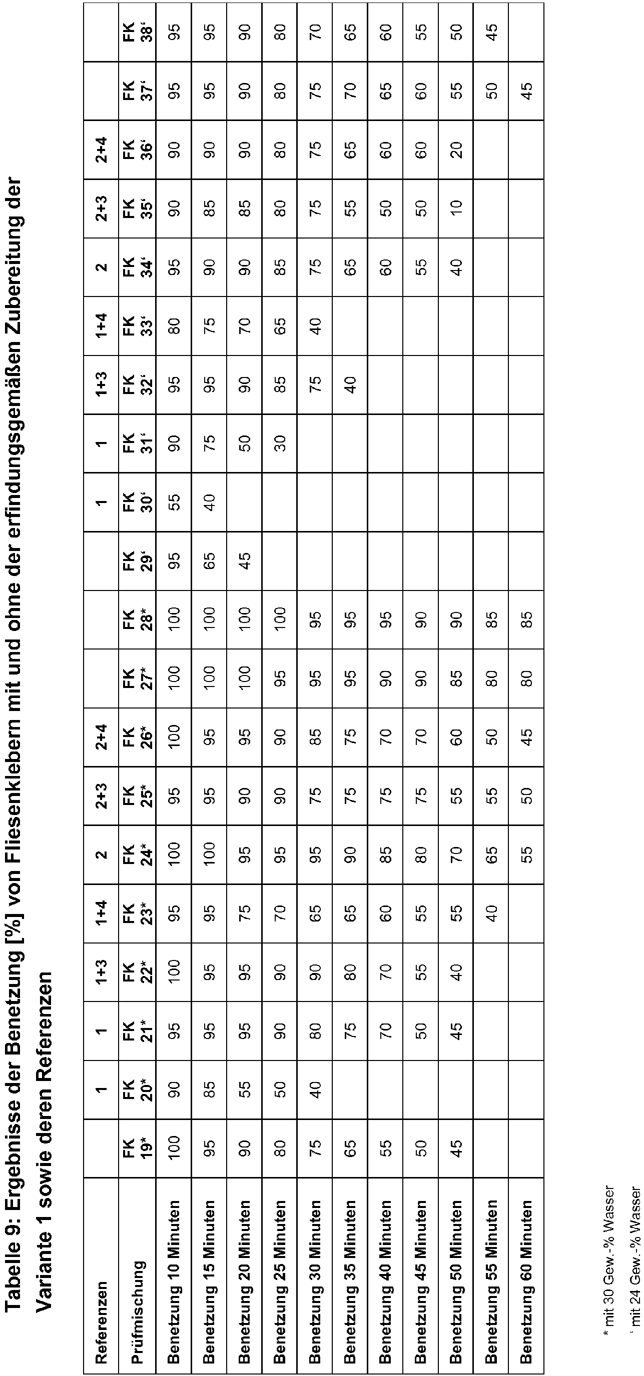

Die Mischungen FK 19 sowie FK 29 enthielten die modifizierte Tylose MHF 10015 P4 und Dispersionspulver bei 30 Gew.-% und 24 Gew.-% Wasser. Mischung FK 19 mit 30 Gew-% Wasser zeigte eine gute Benetzungszeit von 45 Minuten. Mischung FK 29 mit 24 Gew.-% Wasser erreichte aufgrund des zu niedrigen Wassergehalts für einen so hochmodifizierten Celluloseether nur eine Benetzungszeit von 15 - 20 Minuten.

Die Mischungen FK 20 und FK 30 enthielten zusätzlich zur modifizierten Tylose MHF 10015 P4 und Dispersionspulver die Referenz 1 in einer Konzentration von 1,2 Gew.-%. Mischung FK 20 mit 30 Gew.-% Wasser konnte keine gute Benetzungszeit erzielen. Es entstand der Eindruck, dass der Einsatz einer zu hohen Konzentration der Referenz 1 eine negative Auswirkung auf die Benetzungszeit hat.

FK 30 mit 24 Gew.-% Wasser zeigte wie zu erwarten eine schlechtere Benetzungszeit als FK 20. Hier wurden nur 10 Minuten erreicht.

Die Mischungen FK 21 bis FK 23 sowie FK 31 bis FK 33 enthielten zusätzlich zur modifizierten Tylose MHF 10015 P4 und Dispersionspulver die Referenz 1. Die Konzentration des aktiven Fettalkohols hier entsprach der Konzentration des aktiven Fettalkohols wie in 0,2 Gew.-% der Zubereitung der Variante 1. In geringeren Konzentrationen zeigte Referenz 1 eine bessere Wirkung, jedoch keine verbesserte Benetzungszeit im Vergleich zu FK 19 und FK 29 ohne Referenz 1. Möglicherweise ist Referenz 1 mit weiteren Modifizierungsmitteln unverträglich. Die Mischungen FK 22, FK 23, FK 32 sowie FK 33 enthielten zusätzlich noch die Referenz 3 und 4, Tylose MOBS 6 P4 und MH 50 G4. Die Konzentration der Celluloseether in den Mischungen entsprach der Celluloseether-Konzentration in 0,2 Gew.-% der erfindungsgemäßen Zubereitung. Die Benetzungszeiten für die Mischungen mit 30 Gew.-% Wasser waren vergleichbar, wobei die Referenzen 3 und 4 keinen zusätzlichen Einfluss auf die Benetzungszeiten zeigten. Für die Mischungen mit 24 Gew.-% Wasser konnte im Vergleich zur Mischung FK 31 zusätzlich durch die Referenz 3 bzw. Referenz 4 eine leichte Verbesserung der Benetzungszeit beobachtet werden.

Die Mischungen FK 24 bis FK 26 und FK 34 bis FK 36 enthielten zusätzlich zur modifizierten Tylose MHF 10015 P4 und Dispersionspulver die Referenz 2, die ins Anmachwasser gegeben wurde. Der aktive Fettalkoholgehalt wurde so angepasst, dass der Aktivgehalt dem der getrockneten Emulsion der Zubereitung der Variante 1 entsprach. Auch hier unterschieden sich die Mischungen durch den Wassergehalt von 30 Gew.-% und 24 Gew.-%.

Mischung FK 25, FK 26, FK 35 und FK 36 enthielten zusätzlich noch die Referenz 3 bzw. Referenz 4. Die Konzentration der Referenzen, Tylose MOBS 6 P4 und MH 50 G4, in den Mischungen entsprach auch hier der Celluloseether-Konzentration in 0,2 Gew.-% der erfindungsgemäßen Zubereitung. Die Mischungen FK 24 bis FK 26 mit 30 Gew.-% Wasser zeigten eine sehr gute Benetzungszeit, wobei nach 60 Minuten noch 55% der Fliesenrückseite benetzt werden konnte. Ein zusätzlicher Einfluss des Celluloseethers konnte nicht beobachtet werden. Die Mischungen FK 34 bis FK 36 erreichten mit 24 Gew.-% Wasser eine Benetzungszeit von nur noch 45 Minuten. Auch hier zeigte sich kein Einfluss der zusätzlichen Referenzen 3 und 4.

Die Mischungen FK 27, FK 28, FK 37 und FK 38 enthielten zusätzlich zur modifizierten Tylose MHF 10015 P4 und Dispersionspulver die erfindungsgemäße Zubereitung der Variante 1 auf Basis der Tylose MOBS 6 P4 (FK 27 und 37) als auch der Tylose MH 50 G4 (FK 28 und 38). Auch hier unterschieden sich die Mischungen im Wassergehalt von 30 Gew.-% und 24 Gew.-% voneinander. Die Mischungen FK 27 und FK 28 mit 30 Gew.-% Wasser zeigten bis nach 60 Minuten eine bemerkenswerte Benetzung der Fliesenrückseiten von 80 bzw. 85% und hoben sich deutlich von allen anderen Mischungen ab. Mischung FK 37 und FK 38 mit 24 Gew.-% Wasser konnten eine Benetzungszeit von 50 bzw. 55 Minuten erreichen, was ebenfalls das beste Ergebnis aller Mischungen mit selbigem Wassergehalt darstellte.

Die erfindungsgemäße Zubereitung der Variante 1 zeigte auch in Kombination mit modifiziertem Celluloseether bei beiden Wasserfaktoren die besten Benetzungszeiten im Vergleich zu den Referenzen 1 und 2.

**Tabelle 10: Ergebnisse der Benetzung [%] von Fliesenklebern mit erfindungsgemäßer Zubereitung der Variante 1 auf Basis der mittel- bis hochviskosen Celluloseether**

| **Prüfmischung** | **FK 39** | **FK 40** | **FK 41** | **FK 42** |
|---|---|---|---|---|
| **Benetzung 10 Minuten** | 95 | 95 | 100 | 100 |
| **Benetzung 15 Minuten** | 90 | 90 | 95 | 95 |
| **Benetzung 20 Minuten** | 90 | 90 | 95 | 95 |
| **Benetzung 25 Minuten** | 90 | 90 | 90 | 95 |
| **Benetzung 30 Minuten** | 90 | 85 | 90 | 95 |
| **Benetzung 35 Minuten** | 85 | 85 | 85 | 95 |
| **Benetzung 40 Minuten** | 75 | 75 | 80 | 90 |
| **Benetzung 45 Minuten** | 70 | 70 | 70 | 85 |
| **Benetzung 50 Minuten** | 70 | 60 | 70 | 80 |
| **Benetzung 55 Minuten** | 60 | 50 | 55 | 80 |
| **Benetzung 60 Minuten** | 45 | 35 | 45 | 70 |

Wie zu erkennen, erreichten auch die erfindungsgemäßen Zubereitungen mit den mittel- bis hochviskosen Celluloseethern sehr gute Benetzungszeiten. Mit der erfindungsgemäßen Zubereitung C1-6, welche Tylose MHS 300000 P3 enthielt, konnte eine Benetzung von 70 % der Fliesenrückseite noch nach einer Stunde erreicht werden.

**Tabelle 11: Ergebnisse der offenen Zeit (OZ) nach EN 1346 [N/mm²] von Fliesenklebern mit und ohne erfindungsgemäßen Zubereitungen der Variante 1 und Variante 2 sowie deren Referenzen**

| **Referenzen** | | **3** | **4** | **1** | **1** | **1+3** | **1+4** | **2** | **2+3** | **2+4** | | | | | | **1** | **2** |
|---|---|---|---|---|---|---|---|---|---|---|---|---|---|---|---|---|---|
| **Prüfmischung** | FK 1 | **FK 2** | **FK** 3 | **FK 4** | **FK 5** | **FK 6** | **FK** 7 | **FK** 8 | **FK 9** | **FK 10** | **FK 11** | **FK 12** | **FK 14** | **FK 15** | **FK 16** | **FK 17** | **FK 18** |
| **OZ nach 10 Minuten** | 0,71 | 0,78 | 0,76 | 0,90 | 0,89 | 0,92 | 0,78 | 1,01 | 1,00 | 1,03 | 0,96 | 0,99 | 0,89 | 0,99 | 1,33 | 0,74 | 1,09 |
| **OZ nach 20 Minuten** | 0,40 | 0,52 | 0,41 | 0,43 | 0,55 | 0,66 | 0,52 | 0,96 | 1,11 | 0,97 | 1,15 | 1,16 | 0,85 | 1,00 | 1,10 | 0,49 | 0,92 |
| **OZ nach 30 Minuten** | 0,36 | 0,41 | 0,34 | 0,21 | 0,42 | 0,47 | 0,30 | 0,86 | 0,96 | 0,90 | 1,00 | 1,01 | 0,89 | 0,99 | 0,96 | 0,34 | 0,84 |
| **OZ nach 40 Minuten** | | | | | 0,11 | 0,18 | 0,15 | 0,79 | 0,77 | 0,75 | 0,91 | 0,92 | 0,78 | 0,72 | 0,80 | 0,12 | 0,75 |
| **OZ nach 50 Minuten** | | | | | | | | 0,59 | 0,67 | 0,66 | 0,81 | 0,77 | 0,68 | 0,69 | 0,65 | | 0,68 |
| **OZ nach 60 Minuten** | | | | | | | | 0,45 | 0,58 | 0,57 | 0,76 | 0,71 | 0,55 | 0,63 | 0,56 | | 0,59 |

**Tabelle 12: Ergebnisse der Lagertests nach DIN EN 1348 [N/mm²] von Fliesenklebern mit und ohne erfindungsgemäßen Zubereitungen der Variante 1 und Variante 2 sowie deren Referenzen**

| **Referenzen** | | **3** | **4** | **1** | **1** | **1+3** | **1+4** | **2** | **2+3** | **2+4** | | | | | | **1** | **2** |
|---|---|---|---|---|---|---|---|---|---|---|---|---|---|---|---|---|---|
| **Prüfmischung** | **FK 1** | **FK 2** | **FK 3** | **FK 4** | **FK 5** | **FK 6** | **FK 7** | **FK 8** | **FK 9** | **FK 10** | **FK 11** | **FK 12** | **FK 14** | **FK 15** | **FK 16** | **FK 17** | **FK 18** |
| **Norm** | 0,83 | 0,89 | 0,91 | 0,86 | 1,11 | 1,14 | 1,16 | 1,24 | 1,18 | 1,20 | 1,18 | 1,29 | 1,20 | 1,07 | 1,44 | 1,08 | 1,23 |
| **Warm** | 0,64 | 0,69 | 0,63 | 0,00 | 0,69 | 0,77 | 0,78 | 0,77 | 0,80 | 0,75 | 0,86 | 0,95 | 0,87 | 0,71 | 0,88 | 0,76 | 0,85 |
| **Wasser** | 1,19 | 1,28 | 1,20 | 1,05 | 1,36 | 1,49 | 1,24 | 1,80 | 1,83 | 1,82 | 1,77 | 1,87 | 2,52 | 2,07 | 1,94 | 1,32 | 1,54 |

### Offene Zeit nach DIN EN 1346:

Die Mischung FK 1 enthielt nur unmodifizierte Tylose MHF 15000 P4 und zeigte die geringsten Haftzugwerte, was aufgrund der fehlenden Modifizierung zu erwarten war. Die in der Norm zu erfüllenden 30 Minuten wurden nicht erfüllt.
Selbiges gilt für Mischung FK 2 und FK 3. Hier wurde zusätzlich zum unmodifizierten Celluloseether Referenz 3 und 4, Tylose MOBS 6 P4 bzw. MH 50 G4, so beigemengt, dass diese in derselben Konzentration wie in der Zugabemenge von 0,2 Gew.-% der erfindungsgemäßen Zubereitung der Variante 1 vorlag. Auch hier wurde die Norm mit 0,5 N/mm² nach 30 Minuten nicht erfüllt.

Die Mischung FK 4 enthielt zusätzlich zur unmodifizierten Tylose MHF 15000 P4 die Referenz 1 in einer Konzentration von 1,2 Gew.-%. Die Haftzugwerte waren nicht viel höher als bei FK1 und zeigten keine gravierende Verbesserung der offenen Zeit.

Die Mischung FK 5 enthielt zusätzlich zur unmodifizierten Tylose MHF 15000 P4 ebenfalls die Referenz 1. Die Konzentration des aktiven Fettalkohols ist hier aber der Fettalkohol-Konzentration, wie in der Einsatzmenge von 0,2 Gew.-% der erfindungsgemäßen Zubereitung der Variante 1 enthalten ist, angepasst. Die Haftzugwerte waren nicht bedeutend besser als mit der hohen Konzentration der Referenz 1.

Selbiges gilt für Mischung FK 6 und FK 7, die zusätzlich noch die Referenz 3 bzw. 4 enthielten, also die Celluloseether (Tylose MOBS 6 P4 bzw. MH 50 G4), die in der erfindungsgemäßen Zubereitung der Variante 1 enthalten waren. Auch hier wurde die Konzentration so gewählt, dass sie der Konzentration des Celluloseethers in 0,2 Gew.-% der erfindungsgemäßen Zubereitung der Variante 1 entsprachen.

Die Mischungen FK 8 enthielt zusätzlich zur unmodifizierten Tylose MHF 15000 P4 die Referenz 2. Die Konzentration des aktiven Fettalkohols entspricht auch hier wieder der Fettalkohol-Konzentration wie sie in 0,2 Gew.-% der Zubereitung der Variante 1 enthalten ist. Gute Haftzugwerte von 0,59 N/mm² wurden noch nach 50 Minuten offener Zeit erzielt, jedoch sind die Werte generell etwas niedriger als die Werte der Mischungen mit den erfindungsgemäßen Zubereitungen der Variante 1 und 2. Ähnliches gilt auch für Mischung FK 9 und FK 10, die zusätzlich noch die Referenz 3 bzw. 4 enthielten. Auch hier wurde die Konzentration der Referenz 3 bzw. 4 so gewählt, dass sie der Konzentration des Celluloseethers in 0,2 Gew.-% der erfindungsgemäßen Zubereitung der Variante 1 entsprachen. Die Haftwerte waren nach 50 und 60 Minuten offener Zeit etwas höher und erreichten nach 60 Minuten noch 0,58 bzw. 0,57 N/mm². Ein leicht positiver Effekt durch die zusätzliche Referenz 3 bzw. 4 könnte hier die Ursache sein.

Die Mischungen FK 11 und FK 12 enthielten zusätzlich zur unmodifizierten Tylose MHF 15000 P4 die erfindungsgemäße Zubereitung der Variante 1. Die Haftwerte erfüllten noch nach 60 Minuten mit 0,76 und 0,71 N/mm² die Norm von ≥ 0,5 N/mm² nach 30 Minuten, was bei den bisherigen Mischungen mit den Referenzen 1 und 2 nicht gegeben war. Verglichen mit der Referenz 2 erzielten die Mischungen mit der erfindungsgemäßen Zubereitung der Variante 1 vor allem bessere Haftwerte nach 60 Minuten offener Zeit.

Die Mischungen FK 14 und FK 15 zeichneten sich dadurch aus, dass der verwendete unmodifizierte Celluloseether MHF 15000 P4 mit der erfindungsgemäßen Zubereitung der Variante 1 vor der Zugabe zum Trockenmörtel gemischt wurden. Die Konzentration der erfindungsgemäßen Zubereitung der Variante 1 war hier mit 0,165 Gew.-% statt 0,2 Gew.-% etwas niedriger. Die Haftwerte waren ebenfalls etwas niedriger als die der anderen Mischungen, jedoch erreichten sie nach 60 Minuten mit 0,55 und 0,63 N/mm² immer noch die Norm von ≥ 0,5 N/mm².

Die Mischung FK 16 enthielt zusätzlich zur unmodifizierten Tylose MHF 15000 P4 die erfindungsgemäße Zubereitung der Variante 2. Auch hier sind sehr gute Haftzugwerte der offenen Zeit erzielt worden. Nach 60 Minuten wurden immer noch Werte von 0,56 N/mm² erreicht.

Die Mischung FK 17 enthielt neben der unmodifizierten Tylose MHF 15000 P4 die Referenz 1. Die Konzentration des aktiven Fettalkohols ist der Fettalkohol-Konzentration, wie in der Einsatzmenge von 0,5 Gew.-% der erfindungsgemäßen Zubereitung der Variante 2 enthalten ist, angepasst. Die offene Zeit war vergleichbar mit den vorherigen Mischungen, die die Referenz 1 enthielten.

Die Mischung FK 18 enthielt neben dem unmodifizierten Celluloseether die Referenz 2. Auch hier ist die Konzentration des aktiven Fettalkohols wieder der Fettalkohol-Konzentration, wie in der Einsatzmenge von 0,5 Gew.-% der erfindungsgemäßen Zubereitung der Variante 2 enthalten ist, angepasst. Die offene Zeit war mit der Mischung, die die Zubereitung der Variante 2 enthielt vergleichbar. Ein großer Nachteil dieser Mischung ist jedoch, dass die Referenz 2 vor Zugabe des Trockenmörtels immer ins Anmachwasser eingerührt werden muss und nicht der Trockenmörtelmischung beigemengt werden kann.

### Lagerarten nach DIN EN 1348:

Die Mischung FK 1, die nur unmodifizierte Tylose MHF 15000 P4 enthielt, zeigte auch hier wieder die geringsten Haftzugwerte, was aufgrund der fehlenden Modifizierung und Abwesenheit von Dispersionspulver zu erwarten war. Die C1-Norm mit 0,5 N/mm² wurde aber erreicht. Selbiges gilt auch wieder für Mischung FK 2 und FK 3. Wie bereits erwähnt, wurde bei diesen Mischungen zusätzlich zum unmodifizierten Celluloseether die Referenz 3 bzw. 4 so beigemengt, dass dieser in derselben Konzentration wie in der Zugabemenge von 0,2 Gew.-% der erfindungsgemäßen Zubereitung der Variante 1 vorlag. Eine Verbesserung der Haftwerte konnte nicht erzielt werden.

Die Mischung FK 4 beinhaltete neben der unmodifizierten Tylose MHF 15000 P4 auch die Referenz 1 in einer Konzentration von 1,2 Gew.-%. Die Haftzugwerte zeigten auch hier keine Verbesserung zu den Mischungen FK 1: Eine hohe Zugabemenge von Referenz 1 beeinflusste die Haftwerte nach Warm- und Wasserlagerung eher negativ.

Die Mischung FK 5 enthielt neben der unmodifizierten Tylose MHF 15000 P4 auch die Referenz 1 in einer geringeren Konzentration von 0,305 Gew.-%, wobei der aktive Fettalkohol-Gehalt, der Fettalkohol-Konzentration in der Zubereitung der Variante 1 entsprach. Die Haftwerte waren mit der niedrigeren Konzentration der Referenz 1 höher und zeigten im Vergleich zu FK 1 sogar eine leichte Verbesserung in den Haftwerten nach Norm- und Wasserlagerung.
Die Mischungen FK 6 und FK 7 enthielten zusätzlich noch die Referenz 3 bzw. 4, wieder in der Konzentration wie in 0,2 Gew.-% in der Zubereitung der Variante 1 enthalten war. Die Haftwerte sind vergleichbar mit FK 5.

Die Mischung FK 8 enthielt neben der unmodifizierten Tylose MHF 15000 P4 auch die Referenz 2, wobei der aktive Fettalkohol-Gehalt, der Fettalkohol-Konzentration der Zubereitung der Variante 1 entsprach. Die Haftwerte konnten enorm verbessert werden. Gleiches gilt für die Mischungen FK 9 und FK 10, die zusätzlich noch die Referenz 3 bzw. 4 beinhalteten. Eine Verbesserung durch die Referenzen konnte nicht beobachtet werden, die Haftwerte waren annähernd gleich.

Die Mischungen FK 11 und FK 12 enthielten neben der unmodifizierten Tylose MHF 15000 P4 auch die erfindungsgemäße Zubereitung der Variante 1 in einer Konzentration von 0,2 Gew.-%. Die Mischungen FK 14 und FK 15 enthielten 0,165 Gew.-% und waren als Modifizierungsmittel der Tylose MHF 15000 P4 beigemengt worden. Die Haftzugwerte der Norm- und Wasserlagerung zeigten ähnlich gute Werte, jedoch waren die Haftwerte der Wasserlagerung beider Mischungen FK 14 und FK 15 bedeutend höher mit 2,52 bzw. 2,07 N/mm².

Mischung FK 16 beinhaltete die Zubereitung der Variante 2 und zeigte noch etwas höhere Haftzugwerte, vor allem nach der Normlagerung, als die Mischungen FK 11 und FK 12, die die erfindungsgemäße Zubereitung der Variante 1 enthielten.

Die Mischung FK 17 enthielt neben der unmodifizierten Tylose MHF 15000 P4 die Referenz 1. Die Konzentration des aktiven Fettalkohols ist der Fettalkohol-Konzentration angepasst, wie in der Einsatzmenge von 0,5 Gew.-% der erfindungsgemäßen Zubereitung der Variante 2 enthalten war. Die Haftwerte der verschiedenen Lagerarten waren vergleichbar mit den vorherigen Mischungen, die die Referenz 1 enthielten.

Die Mischung FK 18 enthielt neben dem unmodifizierten Celluloseether noch die Referenz 2, wobei auch hier wieder die Konzentration des Fettalkohols an die der erfindungsgemäßen Zubereitung angepasst wurde. Die Haftwerte waren nach der Norm- und Wasserlagerung etwas niedriger als die der Mischung FK 16 mit der erfindungsgemäßen Zubereitung der Variante 2.

### Schlussfolgerung:

Im Allgemeinen kann durch die Verwendung der erfindungsgemäßen Zubereitung der Variante 1 im Zusammenspiel mit unmodifiziertem Celluloseether eine außerordentlich lange Benetzung, eine sehr lange offene Zeit sowie sehr hohe Haftwerte bei allen Lagerarten erzielt werden. Gleiches gilt für den Einsatz der erfindungsgemäßen Zubereitung der Variante 2. Im Vergleich dazu, ist der Einsatz des auf einen silikatischen Träger aufgezogenen Fettalkohols (Referenz 1) zur Verlängerung der offenen Zeit nicht zielführend. Besser wirkt die wässrige Fettalkohol-Emulsion (Referenz 2), die jedoch ins Anmachwasser und nicht in die Trockenmörtelmischung gegeben werden muss, um die guten Eigenschaften zu entfalten, was anwenderunfreundlich ist.

**Tabelle 13: Ergebnisse der offenen Zeit (OZ) nach EN 1346 [N/mm²] von Fliesenklebern mit Tylose MHF 10015 P4 mit und ohne erfindungsgemäßer Zubereitung der Variante 1 und dessen Referenzen bei 30 Gew.-% Wasser**

| **Referenzen** | | **1** | **1** | **1+3** | **1+4** | **2** | **2+3** | **2+4** | | |
|---|---|---|---|---|---|---|---|---|---|---|
| **Prüfmischung** | **FK 19** | **FK 20** | **FK 21** | **FK 22** | **FK 23** | **FK 24** | **FK 25** | **FK 26** | **FK 27** | **FK 28** |
| **OZ nach 10 Minuten** | 1,35 | 0,97 | 1,37 | 1,21 | 1,42 | 1,70 | 1,80 | 1,57 | 1,87 | 1,57 |
| **OZ nach 20 Minuten** | 1,49 | 0,64 | 1,35 | 1,15 | 1,49 | 1,69 | 1,70 | 1,60 | 1,88 | 1,72 |
| **OZ nach 30 Minuten** | 1,38 | 0,43 | 1,44 | 1,18 | 1,36 | 1,66 | 1,62 | 1,73 | 1,78 | 1,76 |
| **OZ nach 40 Minuten** | 1,41 | | 1,19 | 1,22 | 1,36 | 1,54 | 1,48 | 1,57 | 1,68 | 1,52 |
| **OZ nach 50 Minuten** | 1,33 | | 1,22 | 1,33 | 1,33 | 1,35 | 1,42 | 1,41 | 1,71 | 1,58 |
| **OZ nach 60 Minuten** | 1,14 | | 1,11 | 1,24 | 1,08 | 1,28 | 1,17 | 1,23 | 1,63 | 1,42 |

**Tabelle 14: Ergebnisse der offenen Zeit (OZ) nach EN 1346 [N/mm²] von Fliesenklebern mit Tylose MHF 10015 P4 mit und ohne erfindungsgemäßer Zubereitung der Variante 1 und dessen Referenzen bei 24 Gew.-% Wasser**

| **Referenzen** | | **1** | **1** | **1+3** | **1+4** | **2** | **2+3** | **2+4** | | |
|---|---|---|---|---|---|---|---|---|---|---|
| **Prüfmischung** | **FK 29** | **FK 30** | **FK 31** | **FK 32** | **FK 33** | **FK 34** | **FK 35** | **FK 36** | **FK 37** | **FK 38** |
| **OZ nach 10 Minuten** | 1,84 | 0,87 | 1,80 | 1,91 | 2,10 | 2,13 | 2,15 | 2,14 | 2,25 | 2,17 |
| **OZ nach 20 Minuten** | 1,53 | 0,56 | 1,47 | 1,52 | 1,62 | 1,97 | 2,07 | 2,08 | 2,21 | 2,19 |
| **OZ nach 30 Minuten** | 1,08 | 0,34 | 1,02 | 0,83 | 1,08 | 1,79 | 1,77 | 1,74 | 2,00 | 1,94 |
| **OZ nach 40 Minuten** | 0,34 | | 0,28 | 0,25 | 0,45 | 0,97 | 1,05 | 1,00 | 1,39 | 1,41 |
| **OZ nach 50 Minuten** | | | 0,19 | 0,15 | 0,15 | 0,91 | 0,91 | 0,85 | 1,22 | 1,05 |
| **OZ nach 60 Minuten** | | | | | | 0,53 | 0,46 | 0,53 | 0,89 | 0,76 |

**Tabelle 15: Ergebnisse der Lagertests nach DIN EN 1348 [N/mm²] von Fliesenklebern mit Tylose MHF 10015 P4 mit und ohne erfindungsgemäßer Zubereitung der Variante 1 und dessen Referenzen bei 30 Gew.-% Wasser**

| **Referenzen** | | **1** | **1** | **1+3** | **1+4** | **2** | **2+3** | **2+4** | | |
|---|---|---|---|---|---|---|---|---|---|---|
| **Prüfmischung** | **FK 19** | **FK 20** | **FK 21** | **FK 22** | **FK 23** | **FK 24** | **FK 25** | **FK 26** | **FK 27** | **FK 28** |
| **Norm** | 1,09 | 0,39 | 1,14 | 1,17 | 1,30 | 1,21 | 1,18 | 1,10 | 1,20 | 1,26 |
| **Warm** | 1,38 | 0,13 | 1,35 | 0,86 | 1,29 | 1,43 | 1,50 | 1,45 | 1,86 | 1,49 |
| **Wasser** | 1,07 | 0,52 | 0,82 | 0,85 | 0,84 | 1,37 | 1,25 | 1,28 | 1,48 | 1,40 |

**Tabelle 16: Ergebnisse der Lagertests nach DIN EN 1348 [N/mm²] von Fliesenklebern mit Tylose MHF 10015 P4 mit und ohne erfindungsgemäßer Zubereitung der Variante 1 und dessen Referenzen bei 24 Gew.-% Wasser**

| **Referenzen** | | **1** | **1** | **1+3** | **1+4** | **2** | **2+3** | **2+4** | | |
|---|---|---|---|---|---|---|---|---|---|---|
| **Prüfmischung** | **FK 29** | **FK 30** | **FK 31** | **FK 32** | **FK 33** | **FK 34** | **FK 35** | **FK 36** | **FK 37** | **FK 38** |
| **Norm** | 1,06 | 0,45 | 0,93 | 0,95 | 1,11 | 1,04 | 1,00 | 1,13 | 1,12 | 1,24 |
| **Warm** | 1,14 | 0,21 | 1,09 | 0,86 | 0,99 | 1,33 | 1,36 | 1,40 | 1,67 | 1,69 |
| **Wasser** | 0,79 | 0,62 | 0,94 | 0,80 | 0,78 | 1,20 | 1,25 | 1,19 | 1,27 | 1,40 |

### Offene Zeit nach DIN EN 1346:

Die Versuche mit dem modifizierten Celluloseether wurden bei unterschiedlichen Wasserfaktoren durchgeführt. 30 Gew-% Wasser ist der normale Wasserbedarf des verwendeten Celluloseethers, der so auch Standfestigkeit gewährleistet. Alle Mischungen wurden deshalb mit 30 Gew.- % Wasser angesetzt. Die erfindungsgemäße Zubereitung der Variante 1 hat einen leicht verflüssigenden Effekt auf den Kleber, weshalb die Standfestigkeit von ≤ 0,5 mm bei 30 Gew.-% Wasser nicht erreicht werden konnte. Der Wasserbedarf musste auf 24 Gew.-% gesenkt werden, um Standfestigkeit zu gewährleisten.

Die Mischung FK 19 und FK 29 enthielten die modifizierte Tylose MHF 10015 P4 und Dispersionspulver, was die guten offenen Zeiten erklärte. Jedoch zeigte FK 19 selbst nach 60 Minuten noch Haftwerte von 1,14 N/mm², was durch den für diesen Celluloseether notwendigen Wasserbedarf von 30 Gew.-% hervorgerufen wurde. FK 29 erreichte mit einem niedrigeren Wassergehalt von 24 Gew.-% nur noch 0,34 N/mm² nach 40 Minuten.

Die Mischungen FK 20 und 30 enthielten zusätzlich zur modifizierten Tylose MHF 10015 P4 und Dispersionspulver die Referenz 1 in einer Konzentration von 1,2 Gew.-%. Auch hier ist für beide Wasserfaktoren wieder ein negativer Einfluss der hohen Referenz 1-Konzentration beobachtet worden. Es wurde eine offene Zeit von nur 20 Minuten erreicht, was für einen C2-Kleber nicht ausreichend ist.

Die Mischungen FK 21 und FK 31 enthielten zusätzlich zur modifizierten Tylose MHF 10015 P4 und Dispersionspulver die Referenz 1 in niedrigerer Konzentration von 0,305 Gew.-%, wobei der aktive Fettalkohol-Gehalt wieder dem Fettalkohol-Gehalt in 0,2 Gew.-% der erfindungsgemäßen Zubereitung der Variante 1 entsprach. Die offenen Zeiten bei beiden Wasserfaktoren waren nun wieder vergleichbar mit denen der Mischungen ohne Referenz 1. Ein positiver Effekt konnte also nicht ausgemacht werden.

Die Mischungen FK 22, FK 23, FK 32 und FK 33 beinhalteten zusätzlich noch die Referenz 3 bzw. Referenz 4 bzw. dieselbe Menge Tylose MOBS 6 P4 bzw. MH 50 G4, wie in der erfindungsgemäßen Zubereitung der Variante 1 in 0,2 Gew.-% enthalten war. Die Mischung FK 23 und FK 33 konnte bei beiden Wasserfaktoren jeweils etwas bessere Haftwerte erzielen als die Mischungen FK 22 und FK 32 im Vergleich zu den Mischungen FK 21 und 31. Tylose MH 50 G4 hat einen leicht positiven Einfluss auf die offene Zeit zu haben und konnte bei 30 Gew.-% als auch 24 Gew.-% Wasser beobachtet werden.

Die Mischungen FK 24 und FK 34 enthielten zusätzlich zur modifizierten Tylose MHF 10015 P4 und Dispersionspulver die Referenz 2, wobei der Fettalkohol-Gehalt hier, dem Fettalkohol-Gehalt in 0,2 Gew.-% der erfindungsgemäßen Zubereitung der Variante 1 entsprach. Die Haftwerte mit 24 Gew-% Wasser waren vor allem bis 30 Minuten offene Zeit höher als mit 30 Gew.-% Wasser. Während die Haftwerte nach 30 Minuten bei 30 Gew-% Wasser alle noch über 1 N/mm² lagen, fielen die Haftwerte bei 24 Gew.-% Wasser auf unter 1 N/mm² ab. Nach 60 Minuten wurden hier nur noch 0,53 N/mm² erreicht, während bei höherem Wassergehalt der Wert noch bei 1,28 N/mm² lag. Im direkten Vergleich mit Mischung FK 19 und FK 29 ohne Fettalkohol, waren alle Haftwerte höher, mit einem gravierenden Unterschied bei 24 Gew.-% Wasser.

Die Mischungen FK 25, FK 26, FK 35 und FK 36 enthielten zusätzlich noch die Referenz 3 bzw. 4, wobei deren Konzentration wieder der Konzentration in 0,2 Gew.-% der erfindungsgemäßen Zubereitung der Variante 1 entsprach. Alle Haftwerte bei beiden Wasserfaktoren waren im direkten Vergleich mit Mischung FK 24 und FK 34 annähernd identisch, wobei kein positiver oder negativer Effekt der Referenzen 3 und 4 zu beobachten war.

Die Mischungen FK 27, FK 28, FK 37 und FK 38 enthielten zusätzlich zur modifizierten Tylose MHF 10015 P4 und Dispersionspulver die erfindungsgemäße Zubereitung der Variante 1. Bei 30 Gew.-% als auch 24 Gew.-% Wasser erreichten die Mischungen FK 27 und FK 37 etwas höhere Haftwerte als die Mischungen FK 28 und FK 38. Alle vier Mischungen zeigten im direkten Vergleich mit den Mischungen, die die Referenz 2 enthielten, höhere Haftwerte nach 50 und 60 Minuten. Eine zum Teil deutliche Tendenz zu höheren Haftwerten war vor allem bei Mischung FK 27 und FK 37 zu beobachten.

Bemerkenswert waren die hohen Haftwerte der Mischung FK 37 mit 24 Gew.-% nach 10, 20 und 30 Minuten, die über 2 N/mm² umfassten. Mischung FK 38 war ähnlich gut, lag aber nach 30 min mit 1,94 N/mm² knapp unter 2 N/mm².

Somit konnte eine deutliche Verbesserung der Haftwerte durch die erfindungsgemäße Zubereitung im Vergleich zu den Mischungen mit Fettalkohol Emulsion (Referenz 2) erzielt werden.

### Lagerarten nach DIN EN 1348:

Die Mischungen FK 19 und FK 29 enthielten nur die modifizierte Tylose MHF 10015 P4 und Dispersionspulver. Die Haftwerte erfüllten bei FK 19 mit 30 Gew.-% Wasser die C2-Norm, bei FK 29 mit 24 Gew.-% Wasser jedoch nur die C2-Norm für Norm- und Warmlagerung.

Die Mischungen FK 20 als auch FK 30 enthielten zusätzlich zur modifizierten Tylose MHF 10015 P4 und Dispersionspulver die Referenz 1 in einer Konzentration von 1,2 Gew.-%. Bei beiden Wasserfaktoren konnte wieder ein deutlich negativer Einfluss der Referenz 1 auf die Haftwerte der Lagerarten beobachtet werden. Die C2-Norm wurde bei keiner der beiden Mischungen erfüllt.

Die Mischungen FK 21 und FK 31 enthielten zusätzlich zur modifizierten Tylose MHF 10015 P4 und Dispersionspulver die Referenz 1, wobei der aktive Fettalkohol-Gehalt nun wieder dem Fettalkohol-Gehalt in 0,2 Gew.-% der erfindungsgemäßen Zubereitung der Variante 1 entsprach. Die Haftwerte erzielten wieder höhere Werte. Vor allem bei 30 Gew.-% Wasser konnten ähnliche Haftwerte wie die der Mischung FK 19 erreicht werden. Mit 24 Gew-% Wasser waren die Haftwerte allgemein etwas niedriger. Die C2-Norm bei beiden Wasserfaktoren wurde nicht für alle Lagerarten erreicht.

Die Mischungen FK 22, FK 23, FK 32 und FK 33 beinhalteten zusätzlich noch die Referenz 3 bzw. 4, d.h. dieselbe Menge Celluloseether (Tylose MOBS 6 P4 bzw. MH 50 G4) wie in der erfindungsgemäßen Zubereitung der Variante 1 in 0,2 Gew.-% enthalten war. Eine Verbesserung der mit Mischung FK 21 bzw. FK 31 erreichten Haftwerte konnte nicht festgestellt werden.

Die Mischungen FK 24 und FK 34 enthielten zusätzlich zur modifizierten Tylose MHF 10015 P4 und Dispersionspulver die Referenz 2, wobei der aktive Fettalkohol- Gehalt wieder dem Alkohol-Gehalt in 0,2 Gew.-% der erfindungsgemäßen Zubereitung der Variante 1 entsprach. Die Haftwerte bei beiden Wasserfaktoren sind ähnlich mit gering höheren Haftwerten bei 30 Gew.-% Wasser. Verglichen mit den Mischungen FK 19 und FK 29 konnten jedoch bedeutend höhere Haftwerte erreicht werden. Die C2-Norm wurde bei beiden Wasserfaktoren erfüllt.

Die Mischungen FK 25, FK 26, FK 35 und FK 36 beinhalteten zusätzlich noch die Referenz 3 bzw. 4, d.h. dieselbe Menge Celluloseether (Tylose MOBS 6 P4 bzw. MH 50 G4) wie in der erfindungsgemäßen Zubereitung der Variante 1 in 0,2 Gew.-% enthalten war. Eine Verbesserung der mit Mischung FK 24 bzw. FK 34 erreichten Haftwerte konnte auch hier nicht festgestellt werden.

Die Mischungen FK 27, FK 28, FK 37 und FK 38 enthielten zusätzlich zur modifizierten Tylose MHF 10015 P4 und Dispersionspulver die erfindungsgemäße Zubereitung der Variante 1. Bei beiden Wasserfaktoren konnten hohe Haftwerte erzielt werden. Im Vergleich zu den Mischungen ohne erfindungsgemäße Zubereitung und ohne Referenzen konnten eine deutliche Verbesserung der Haftwerte erreicht werden. Für Mischung FK 27 und FK 37 konnten bei beiden Wasserfaktoren sehr hohe Haftwerte nach der Warmlagerung beobachtet werden. Nur Mischung FK 38 war hier noch vergleichbar gut. Verglichen mit den Mischungen, die die Referenz 2 enthielten, konnten überwiegend höhere Haftwerte mit dem erfindungsgemäßen Zubereitung der Variante 1 erzielt werden.

### Schlussfolgerung:

Durch die Verwendung der erfindungsgemäßen Zubereitung der Variante 1 konnte in Kombination mit modifiziertem Celluloseether eine außerordentlich lange Benetzung, eine sehr lange offene Zeit sowie sehr hohe Haftwerte bei allen Lagerarten erzielt werden. Im Vergleich mit dem Einsatz der wässrigen Fettalkohol-Emulsion (Referenz 2), kann mit der erfindungsgemäßen Zubereitung der Variante 1 eine bessere Benetzung mit daraus resultierenden längeren offenen Zeiten erreicht werden. Durch die erfindungsgemäße Zubereitung der Variante 1 können auch die Lagerarten, insbesondere die Warmlagerung mit deutlich höheren Haftzugwerten, positiv beeinflusst werden als ohne Zubereitung oder mit Referenz 1 bzw. 2.

### Versuche mit CEM II/A-S und CEM II/B-P:

Es wurden Versuche mit Kompositzementen durchgeführt, wobei die Fliesenklebermischungen statt dem verwendeten CEM I 52,5 N nun entweder CEM II 42,5 R/A-S oder CEM II 42,5 R/B-P enthielten.

Auch hier konnte durch den Einsatz der erfindungsgemäßen Zubereitungen eine positive Auswirkung auf die Benetzung, die offene Zeit und die Haftzugwerte der verschiedenen Lagerarten beobachtet werden. Die Benetzung als auch die Haftzugwerte waren nicht ganz so hoch wie mit CEM I, konnten aber mit CEM II 42,5 R/A-S bis 60 Minuten noch 0,58 - 0,75 N/mm² erreichen. Die Mischungen basierend auf CEM II 42,5 R/B-P konnten alleine mit der erfindungsgemäßen Zubereitung der Variante 1 noch Haftzugwerte von 0,56 bzw. 0,52 N/mm² nach 40 Minuten erzielen. Die wässrige Emulsion als auch die auf einen Träger aufgezogenen Fettalkohole erreichten hier nur Werte von < 0,2 N/mm².

Die Haftwerte nach den verschiedenen Lagerarten zeigten durch den Einsatz der erfindungsgemäßen Zubereitungen als auch der wässrigen Emulsion vergleichbar gute Werte, die größtenteils im C2-Bereich, d.h. > 1 N/mm² lagen.

**Verlängerung der offenen Zeit und Bearbeitungszeit anderer Trockenmörtel:**
Versuche zur Verlängerung der offenen Zeit und Bearbeitungszeit mittels Einsatz der erfindungsgemäßen Zubereitungen der Variante 1 und 2 im Armierungsspachtel für WDVS, Kalk-Zementputz sowie im Skim Coat bzw. Zementflächenspachtel konnten ebenfalls gute Ergebnisse erzielen.

Die verarbeitungsoffene Zeit für das Applizieren des Armierungsgewebes im Armierungsspachtel für WDVS war vergleichbar mit der Benetzungszeit der Fliesenkleber. Nach 60 Minuten konnte das Netz immer noch problemlos eingelegt werden. Mittels Fliesen wurde auch hier die Benetzung geprüft. Nach 60 Minuten konnten immer noch mit beiden erfindungsgemäßen Zubereitungen 65 bzw. 55 % der Fliesenrückseite benetzt werden.

Die Verarbeitungszeit von Kalk-Zementputz liegt bei Anwendung eines geeigneten Celluloseethers zwischen 50 und 60 Minuten. Mittels der erfindungsgemäßen Zubereitungen konnte die Verarbeitungszeit auf 70 bzw. 90 Minuten verlängert werden.

Auch im Skim Coat bzw. Zementflächenspachtel konnte eine positive Auswirkung wie eine längere Verarbeitungszeit der erfindungsgemäßen Zubereitungen beobachtet werden.

### Versuche mit Polysacchariden:

Es wurden weitere Versuche mit wasserlöslichen Substanzen und Polysacchariden durchgeführt. In die Versuche wurden, Tylovis PVA 18 (Polyvinylacetat), Polyacrylamid, Pektin, Karrageen, Guarkernmehl und dessen Derivate und Johannisbrotkernmehl mit aufgenommen.

Bis auf Polyacrylamid wurden alle Substanzen wie die erfindungsgemäße Zubereitung der Variante 2 hergestellt. Hier wurde die wässrige Alkohol- Emulsion in gleichen Teilen in die wasserlöslichen Substanzen eingeknetet.

Da Polyacrylamid, in zu hohen Mengen eingesetzt, nur noch schwer verarbeitbar ist, wurde das Herstellungsverfahren der Zubereitung der Variante 1 gewählt. Die Emulsion wurde 1:1 mit Wasser verdünnt, wobei nach vollständiger Homogenisierung das Polyacrylamid eingerührt wurde. Nach 2h Mischzeit wurde die Lösung getrocknet und anschließend zu Pulver gemahlen.

Die so hergestellten Zubereitungen wurden mit 0,2 bzw. 0,5 Gew.-% zusätzlich zu 0,3 bzw. 0,4 Gew.-% unmodifizierter Tylose MHF 15000 P4 in selbe Fliesenkleber-Formulierung eingesetzt wie zuvor beschrieben. Celluloseether ist unabdingbar in allen Formulierungen, da sonst die Wasserretention als auch eine gute Verarbeitung nicht gegeben sind, um akzeptable Benetzungszeiten zu erzielen. Es zeigte sich, dass bei gleichem Wassergehalt von 23 Gew.-% die Benetzungszeiten nicht in dem Maße verlängert wurden wie im Falle des Einsatzes von Zubereitungen basierend auf Celluloseether.

Guarkernmehl und dessen Derivate und auch Johannisbrotkernmehl zeigten die längsten Benetzungszeiten und erreichten nach 45 Minuten noch 65 bzw. 50% Benetzung der Fliesenrückseite. Nach 50 Minuten fiel die Benetzung ab und erreichte 20%. Karrageen und Pektin erreichten eine gute Benetzungszeit von 40 Minuten. Eine Verarbeitung des Tylovis PVA 18 war nicht möglich, da die Zubereitung während des Trocknungsprozesses zusammengebacken ist.

Die Zubereitungen auf Basis der Celluloseether und der Polysaccharide zeigen somit den besten Effekt auf die Verlängerung der offenen Zeit bzw. Benetzungszeit.

### Literatur:

Jenni, A.; Holzer, L.; Zurbriggen, R.; Herwegh, M.; Influence of polymers on microstructure and adhesive strength of cementitious tile adhesive mortar, Cement and Concret Research 35, 2005, 35 - 50.

Die vorliegende Erfindung umfasst die folgenden Ausführungsformen:
1. Zubereitung umfassend
   (i) mindestens einen Celluloseether und/oder ein Polysaccharid oder ein Derivat davon,
   (ii) mindestens einen Fettalkohol oder ein Dimer oder Trimer davon,
   (iii) gegebenenfalls mindestens ein hydraulisches Bindemittel und
   (iv) gegebenenfalls mindestens eine Gesteinskörnung.
2. Zubereitung nach Punkt 1 oder 2, wobei Komponente (i) und Komponente (ii) als Feststoff vorliegen.
3. Zubereitung nach einem der vorhergehenden Punkte, wobei Komponente (i) und Komponente (ii) gemeinsam in einem Partikel vorliegen.
4. Zubereitung nach Punkt 3, wobei Komponente (i) und Komponente (ii) in dem Partikel möglichst homogen verteilt sind oder Komponente (ii) auf Komponente (i) angereichert ist.
5. Zubereitung nach einem der Punkte 3 oder 4, wobei der durchschnittliche Durchmesser d₅₀ des Partikels im Bereich von 0,01-1000 µm, bevorzugt 0,01-500 µm, stärker bevorzugt 0,01-250 µm liegt.
6. Zubereitung nach einem der vorhergehenden Punkte, wobei Komponente (i) und Komponente (ii) als feste Lösung vorliegen.
7. Zubereitung nach einem der vorhergehenden Punkte, wobei die Polysacharide und Derivate davon ausgewählt sind aus Guarkernmehl, Guarether, Johannisbrotkernmehl, Karrageen und Pektin.
8. Zubereitung nach einem der vorhergehenden Punkte, wobei der Celluloseether ausgewählt ist aus Methylcellulose (MC), Methylhydroxypropylcellulose (MHPC), Methylhydroxyethylcellulose (MHEC), Hydroxyethylcellulose (HEC), Ethylhydroxyethylcellulose (EHEC), Methylethylhydroxyethylcellulose (MEHEC) Carboxymethylcelluloseether (CMC), Carboxymethylhydroxyethylcelluloseether (CMHEC), Carboxymethylhydroxypropylcelluloseether (CMHPC), Carboxymethylmethylcelluloseether (CMMC), Carboxymethylmethylhydroxyethylcelluloseether (CMMHEC), Carboxymethylmethylhydroxypropylcelluloseether (CMMHPC), Sulfoethylmethylcelluloseeher (SEMC), Sulfoethylmethylhydroxyethylcelluloseether (SEMHEC), Sulfoethylmethylhydroxypropylcelluloseether (SEMHPC) und Methylhydroxyethylhydroxypropylcelluloseether (MHEHPC), bevorzugt Methylhydroxypropyl-cellulose und Methylhydroxyethycellulose.
9. Zubereitung nach Punkt 8, wobei
   Methylcellulose einen durchschnittlichen Substitutionsgrad DS_{Methyl} von 1,4 bis 2,2, bevorzugt 1,6 bis 2,0 aufweist; Methylhydroxypropylcellulose (MHPC) einen durchschnittlichen Substitutionsgrad DS_{Methyl} von 1,2 bis 2,2, bevorzugt 1,3 bis 2,0 und bevorzugt einen molekularen Substitutionsgrad MS_{Hydroxypropyl} von 0,1 bis 1,0, stärker bevorzugt von 0,15 bis 0,7 aufweist; Methylhydroxyethylcellulose (MHEC) einen durchschnittlichen Substitutionsgrad DS_{Methyl} von 1,2 bis 2,2, bevorzugt 1,4 bis 1,9 und bevorzugt einen molekularen Substitutionsgrad MS_{Hydroxyethyl} von 0,05 bis 0,4, besonders bevorzugt 0,1 bis 0,35 aufweist; Hydroxyethylcellulose (HEC) einen mittleren Substitutionsgrad MS_{Hydroxyethyl} von 1,2 bis 4,0, bevorzugt 1,6 bis 3,5 aufweist; Ethylhydroxyethylcellulose (EHEC) einen durchschnittlichen Substitutionsgrad DS_{Ethyl} von 0,5 bis 1,5 und bevorzugt einen molekularen Substitutionsgrad MS_{Hydroxyethyl} von 1,5 bis 3,5 aufweist; Methylethylhydroxyethylcellulose (MEHEC) einen durchschnittlichen Substitutionsgrad DS_{Methyl} von 0,2 bis 2,0 und einen durchschnittlichen Substitutionsgrad DS_{Ethyl} von 0,05 bis 1,5 und bevorzugt einen molekularen Substitutionsgrad MS_{Hydroxyethyl} von 0,2 bis 3,5 aufweist; Carboxymethylcelluloseether (CMC) einen durchschnittlichen Substitutionsgrad DS_{carboxymethyl} von 0,4 bis 1,0 aufweist; Carboxymethylhydroxyethylcelluloseether (CMHEC) einen durchschnittlichen Substitutionsgrad DS_{carboxymethyl} von 0,1 bis 1,0 und bevorzugt einen molekularen Substitutionsgrad MS_{Hydroxyethyl} von 0,8 bis 3,5 aufweist; Carboxymethylhydroxypropylcelluloseether (CMHPC) einen durchschnittlichen Substitutionsgrad DS_{Carboxymethyl} von 0,1 bis 1,0 und bevorzugt einen molekularen Substitutionsgrad MS_{Hydroxpropyl} von 0,8 bis 3,3 aufweist; Carboxymethylmethylcelluloseether (CMMC) einen durchschnittlichen Substitutionsgrad DS_{Carboxymethyl} von 0,005 bis 1,0, und bevorzugt aufweist; und bevorzugt einen durchschnittlichen Substitutionsgrad DS_{Methyl} von 0,2 bis 2,0, aufweist; Carboxymethylmethylhydroxyethylcelluloseether (CMMHEC) einen durchschnittlichen Substitutionsgrad DS_{Carboxymethyl} von 0,005 bis 1,0, einen durchschnittlichen Substitutionsgrad DS_{Methyl} von 0,2 bis 2,0, aufweist und bevorzugt einen molekularen Substitutionsgrad MS_{Hydroxethyl} von 0,8 bis 3,5 aufweist; Carboxymethylmethylhydroxypropylcelluloseether (CMMHPC) einen durchschnittlichen Substitutionsgrad DS_{carboxymethyl} von 0,005 bis 1,0, einen durchschnittlichen Substitutionsgrad DS_{Methyl} von 0,2 bis 2,0, aufweist;und bevorzugt einen molekularen Substitutionsgrad MS_{Hydroxpropyl} von 0,8 bis 3,3 aufweist; Sulfoethylmethylcelluloseeher (SEMC) einen durchschnittlichen Substitutionsgrad DS_{Sulfoethyl} von 0,005 bis 0,01, und bevorzugt einen durchschnittlichen Substitutionsgrad DS_{Methyl} von 0,2 bis 2,0, aufweist;
   Sulfoethylmethylhydroxyethylcelluloseether (SEMHEC) einen durschnittlichen Substitutionsgrad DS_{sulfoethyl} von 0,005 bis 0,01, einen durchschnittlichen Substitutionsgrad DS_{Methyl} von 0,2 bis 2,0, und bevorzugt einen molekularen Substitutionsgrad MS_{Hydroxyethyl} von 0,1 bis 0,3 aufweist;
   Sulfoethylmethylhydroxypropylcelluloseether (SEMHPC) einen durschnittlichen Substitutionsgrad DS_{sulfoethyl} von 0,005 bis 0,01, einen durchschnittlichen Substitutionsgrad DS_{Methyl} von 0,2 bis 2,0, und bevorzugt einen molekularen Substitutionsgrad MS_{Hydroxypropyl} von 0,1 bis 0,3 aufweist und Methylhydroxyethylhydroxypropylcelluloseether (MHEHPC), einen durchschnittlichen Substitutionsgrad DS_{Methyl} von 1,2 bis 2,0, bevorzugt 1,4 bis 1,8 und bevorzugt einen molekularen Substitutionsgrad MS_{Hydroxyethyl} von 0,1 bis 1,0, besonders bevorzugt 0,3 bis 0,5, und bevorzugt einen molekularen Substitutionsgrad MS_{Hydroxypropyl} von 0,1 bis 1,0, stärker bevorzugt von 0,15 bis 0,7 aufweist.
10. Zubereitung nach einem der vorhergehenden Punkte, wobei der Celluloseether einen mittleren Polymerisationsgrad von 10 bis 5.000 aufweist.
11. Zubereitung nach einem der vorhergehenden Punkte, wobei der Celluloseether und/oder das Polysaccharid eine Wasserlöslichkeit von mindestens 2 g/l Wasser bei 20 °C aufweist.
12. Zubereitung nach einem der vorhergehenden Punkte, wobei der Celluloseether eine Viskosität von 1 bis 500.000 mPa s, bevorzugt 3 bis 300.000 mPa s, stärker bevorzugt 6 bis 60.000 mPa s aufweist (Höppler; 2%ige Lösung; 20 °C; 20°dH).
13. Zubereitung nach einem der vorhergehenden Punkte, wobei der Fettalkohol oder das Dimer oder Trimer davon synthetischen oder natürlichen Ursprungs ist.
14. Zubereitung nach einem der vorhergehenden Punkte, wobei der Fettalkohol ein C₆₋₃₀-Alkanol, C₆₋₃₀-Alkenol, C₆₋₃₀-Alkandienol, C₆₋₃₀ Alkantrienol oder Oxoalkohol ist.
15. Zubereitung nach einem der vorhergehenden Punkte, wobei Komponente (i) und Komponente (ii) gemeinsam eine Restfeuchte von 0-20 Gew.-%, bevorzugt 0-10 Gew.-%, bezogen auf die Gesamtmasse der Komponenten (i)+(ii) aufweist.
16. Zubereitung nach einem der vorhergehenden Punkte, wobei das Gewichtsverhältnis von Komponente (i) zu Komponente (ii) im Bereich von 1:15 bis 15:1, bevorzugt 1:4 bis 4:1, liegt.
17. Zubereitung nach einem der vorhergehenden Punkte, wobei der Anteil der Komponenten (i) und (ii) 0,1-100 Gew.-%, bevorzugt 0,1-1,0 Gew.-%, stärker bevorzugt 0,2-0,5 Gew.-% bezogen auf die Gesamtmasse der Zubereitung ist.
18. Zubereitung nach einem der vorhergehenden Punkte, wobei das hydraulische Bindemittel ausgewählt ist aus Zement, gebranntem Kalk, Puzzolan, Trass und Gips, bevorzugt Zement.
19. Zubereitung nach einem der vorhergehenden Punkte, wobei die Gesteinskörnung ausgewählt ist aus Sand, Kies und synthetischen Füllstoffen.
20. Zubereitung nach einem der vorhergehenden Punkte, ferner umfassend
   (v) mindestens einen zusätzlichen Celluloseether oder ein Derivat davon.
21. Zubereitung nach einem der vorhergehenden Punkte, wobei die Zubereitung ein Trockenmörtel, Fliesenkleber, eine Spachtelmasse, ein Putzsystem oder Trockenmörtel für Wärmedämmverbundsysteme ist.
22. Verfahren zur Herstellung einer Zubereitung gemäß einem der Punkte 1-21, umfassend die Schritte
   (a) Mischen mindestens eines Celluloseethers und/oder eines Polysaccharids oder eines Derivats davon, mindestens eines Fettalkohols oder Dimers oder Trimers davon und mindestens eines Lösungsmitttels,
   (b) Behandeln der nach Schritt (a) erhaltenen Mischung unter Scherung ggf. bei erhöhten Temperaturen,
   (c) Trocknen und gegebenenfalls Zerkleinern der nach Schritt (b) erhaltenen Mischung und
   (d) ggf. Mischen der nach Schritt (c) erhaltenen Mischung mit mindestens einem hydraulischen Bindemittel und gegebenenfalls mit mindestens einer Gesteinskörnung.
23. Verfahren nach Punkt 22, wobei das Lösungsmittel Wasser ist.
24. Verfahren nach Punkt 22 oder 23, wobei mindestens ein Fettalkohol und das Lösungsmittel in Form einer Emulsion vorliegen.
25. Verfahren nach Punkt 24, wobei die Emulsion 5 bis 40 Gew.-% Fettalkohol bezogen auf die Gesamtmasse der Emulsion enthält.
26. Verfahren nach einem der Punkte 22-25, wobei Schritt (b) unter Einrühren oder Einkneten erfolgt.
27. Verfahren nach einem der Punkte 22-26, wobei die nach Schritt (c) erhaltene Mischung einen Restfeuchtegehalt von 0-20 Gew.-%, bevorzugt 0-10 Gew.-%, bezogen auf die Gesamtmasse der Mischung aufweist.
28. Verwendung der Zubereitung nach einem der Punkte 1 bis 21 als Baustoff oder als Additiv für Baustoffe.
29. Verwendung der Zubereitung nach Punkt 28, wobei der Baustoff ausgewählt ist aus Mörtelsystemen, insbesondere für Wärmedämmverbundsysteme, Putzsystemen, Spachtelmassen und Fliesenkleber.
30. Verwendung nach einem der Punkte 28 oder 29 zur Verlängerung der offenen Zeit, zur Verbesserung der Benetzung, zur Verlängerung der Verarbeitungszeit und zur Verbesserung der Haftzugwerte.

## Patentansprüche

1. Zubereitung umfassend
(i) mindestens einen Celluloseether und/oder mindestens ein Polysaccharid oder ein Derivat davon,
(ii) mindestens einen Fettalkohol oder ein Dimer oder Trimer davon,
(iii) gegebenenfalls mindestens ein hydraulisches Bindemittel und
(iv) gegebenenfalls mindestens eine Gesteinskörnung.

2. Zubereitung nach Anspruch 1, wobei Komponente (i) und Komponente (ii) gemeinsam in einem Partikel vorliegen, insbesondere darin homogen verteilt sind oder Komponente (ii) auf Komponente (i) angereichert ist.

3. Zubereitung nach einem der vorhergehenden Ansprüche, wobei der Celluloseether ausgewählt ist aus Methylcellulose (MC), Methylhydroxypropylcellulose (MHPC), Methylhydroxyethylcellulose (MHEC), Hydroxyethylcellulose (HEC), Ethylhydroxyethylcellulose (EHEC), Methylethylhydroxyethylcellulose (MEHEC) Carboxymethylcelluloseether (CMC), Carboxymethylhydroxyethylcelluloseether (CMHEC), Carboxymethylhydroxypropylcelluloseether (CMHPC), Carboxymethylmethylcelluloseether (CMMC), Carboxymethylmethylhydroxyethylcelluloseether (CMMHEC), Carboxymethylmethylhydroxypropylcelluloseether (CMMHPC), Sulfoethylmethylcelluloseeher (SEMC), Sulfoethylmethylhydroxyethylcelluloseether (SEMHEC), Sulfoethylmethylhydroxypropylcelluloseether (SEMHPC) und Methylhydroxyethylhydroxypropylcelluloseether (MHEHPC), bevorzugt Methylhydroxypropyl-cellulose und Methylhydroxyethycellulose.

4. Zubereitung nach einem der vorhergehenden Ansprüche, wobei der Celluloseether und/oder das Polysaccharid eine Wasserlöslichkeit von mindestens 2 g/l Wasser bei 20 °C aufweist.

5. Zubereitung nach einem der vorhergehenden Ansprüche, wobei der Fettalkohol ein C₆₋₃₀-Alkanol, C₆₋₃₀-Alkenol, C₆₋₃₀-Alkandienol, C₆₋₃₀ Alkantrienol oder Oxoalkohol ist.

6. Zubereitung nach einem der vorhergehenden Ansprüche, wobei das Gewichtsverhältnis von Komponente (i) zu Komponente (ii) im Bereich von 1:15 bis 15:1, bevorzugt 1:4 bis 4:1, liegt.

7. Zubereitung nach einem der vorhergehenden Ansprüche, ferner umfassend
(v) mindestens einen zusätzlichen Celluloseether oder ein Derivat davon.

8. Zubereitung nach einem der vorhergehenden Ansprüche, wobei die Zubereitung ein Trockenmörtel, Fliesenkleber, eine Spachtelmasse, ein Putzsystem oder Trockenmörtel für Wärmedämmverbundsysteme ist.

9. Verfahren zur Herstellung einer Zubereitung gemäß einem der Ansprüche 1-8, umfassend die Schritte
(a) Mischen mindestens eines Celluloseethers und/oder mindestens eines Polysaccharids oder eines Derivats davon, mindestens eines Fettalkohols oder Dimers oder Trimers davon und mindestens eines Lösungsmitttels, insbesondere Wasser,
(b) Behandeln der nach Schritt (a) erhaltenen Mischung unter Scherung ggf. bei erhöhten Temperaturen,
(c) Trocknen und gegebenenfalls Zerkleinern der nach Schritt (b) erhaltenen Mischung und
(d) ggf. Mischen der nach Schritt (c) erhaltenen Mischung mit mindestens einem hydraulischen Bindemittel und gegebenenfalls mit mindestens einer Gesteinskörnung.

10. Verfahren nach Anspruch 9, wobei der mindestens eine Fettalkohol und das Lösungsmittel in Form einer Emulsion vorliegen.

11. Verfahren nach einem der Ansprüche 9 oder 10, wobei Schritt (b) unter Einrühren oder Einkneten erfolgt.

12. Verfahren nach einem der Ansprüche 9-11, wobei die nach Schritt
(c) erhaltene Mischung einen Restfeuchtegehalt von 0-20 Gew.-%, bevorzugt 0-10 Gew.-%, bezogen auf die Gesamtmasse der Mischung aufweist.

13. Verwendung der Zubereitung nach einem der Ansprüche 1 bis 8 als Baustoff oder als Additiv für Baustoffe.

14. Verwendung der Zubereitung nach Anspruch 13, wobei der Baustoff ausgewählt ist aus Trockenmörtel, Fliesenkleber, Spachtelmasse, Putzsystem oder Trockenmörtel für Wärmedämmverbundsysteme.

15. Verwendung nach einem der Ansprüche 13 oder 14 zur Verlängerung der offenen Zeit, zur Verbesserung der Benetzung, zur Verlängerung der Verarbeitungszeit und zur Verbesserung der Haftzugwerte.
